# FASCICULE DE BREVET EUROPEEN

(11) **EP 0 398 797 B1**
(45) Date de publication et mention de la délivrance du brevet: **17.07.1996**
(21) Numéro de dépôt: 90401289.5
(22) Date de dépôt: 15.05.1990
(51) Int. Cl.: B64C 25/58

(54) **Dispositif de réduction de la souplesse d'un amortisseur oléopneumatique d'atterrisseur, et amortisseur et atterrisseur le comportant**
Vorrichtung zur Verminderung der Weichheit eines Fahrwerks-Öl-Luft-Dämpfers und Fahrwerk und damit ausgerüsteter Öl-Luft-Dämpfer
Device to reduce the suppleness of a landing gear oleopneumatic damper, and landing gear and damper equipped with it

(30) Priorité: 18.05.1989 FR 8906510
(43) Date de publication de la demande: 22.11.1990
(73) Titulaire: AEROSPATIALE Société Nationale Industrielle, F-75781 Paris Cédex 16 (FR)
(72) Inventeur: Bietenhader, Claude, F-13410 Lambesc (FR); Jampy, Bernard, F-13710 Fuveau (FR); Plissonneau, Bernard, F-13100 Aix-en-Provence (FR)
(74) Mandataire: Bérogin, Francis

(56) Documents cités:
- FR-A- 1 239 315
- FR-A- 2 386 427
- FR-A- 2 489 458
- US-A- 4 720 085

## Description

La présente invention concerne un amortisseur d'atterrisseur d'aérodyne, organe dont la fonction est d'absorber élastiquement et avec amortissement l'énergie de descente de l'appareil lors de l'atterrissage. Elle se rapporte plus précisément à un dispositif, permettant de réduire, voire même de supprimer en pratique, la souplesse d'un tel amortissement du type oléo-pneumatique de suspension pour un atterrisseur d'hélicoptère, et en particulier un atterrisseur principal du train d'atterrissage d'un hélicoptère embarqué, c'est-à-dire destiné à être mis en oeuvre sur des navires, tels que des navires porte-aéronefs (porte-hélicoptères ou porte-avions), ou navires de plus faibles tonnages (tels que corvettes ou frégates porte-hélicoptères), équipés d'une plate-forme d'appontage et de décollage attenante à un hangar de parcage d'un hélicoptère, ou encore sur des plates-formes de travail en mer, notamment du type "auto-élévatrice".

On sait que les hélicoptères embarqués sont souvent des versions "navalisées" d'hélicoptères initialement conçus pour des applications terrestres, et pour lesquelles il est avantageux d'augmenter la stabilité, en particulier latérale, des hélicoptères embarqués et posés, pour éviter que, avant leur envol ou après leur posé, ceux-ci risquent d'être renversés par les mouvements de tangage et/ou de roulis des plate-formes d'appontage solidaires des navires porteurs, ainsi que par les vents violents qui balaient souvent ces plate-formes d'appontage et les ponts "hélicoptères" des plate-formes de travail en mer.

Il est de plus à noter que ces exigences de stabilité, en particulier latérale, accrue des hélicoptères embarqués se retrouvent, dans une certaine mesure, pour la mise en oeuvre d'hélicoptères à partir de surfaces terrestres inclinées ou en dévers et souvent balayées par des vents violents, comme il s'en présente en montagne par exemple.

Le dispositif selon l'invention, destiné à réduire la souplesse d'un amortisseur, a été spécifiquement conçu pour équiper, d'origine ou en dispositif additionnel ou optionnel, monté en "rétrofit", les amortisseurs oléo-pneumatiques de suspension des atterrisseurs, en particulier principaux, d'hélicoptères embarqués.

On sait que de nombreuses études ont été entreprises pour accroître la stabilité, en particulier latérale, des hélicoptères embarqués dont l'architecture générale et les atterrisseurs n'ont pas été optimisés à l'origine pour l'embarquement sur navires.

Certaines de ces études ont conduit à l'utilisation de dispositifs additionnels destinés à équiper de tels hélicoptères, pour accroître leur stabilité.

Des dispositifs de ce type font l'objet de la demande de brevet français 88 00443 de la demanderesse, qui propose d'ajouter, de part et d'autre du fuselage de l'hélicoptère, des stabilisateurs latéraux auxiliaires équipés de roues latérales, et destinés à accroître le polygone de sustentation de l'hélicoptère sur la plate-forme d'appontage.

Par ailleurs, pour réduire ou éliminer l'instabilité d'un hélicoptère lorsqu'il repose sur une plateforme instable, il a déjà été proposé d'équiper ses atterrisseurs d'amortisseurs de suspension particuliers.

Un amortisseur de suspension de ce type est décrit dans la demande de brevet européen 122 731, et comprend une tige creuse de piston et un piston montés axialement coulissant dans un cylindre rempli de liquide hydraulique, ainsi qu'un passage de liquide en compression, ménagé dans le piston, et au-travers duquel le liquide est laminé pendant une compression de l'amortisseur, ainsi qu'un passage de liquide en détente, par lequel le liquide hydraulique s'écoule pendant une détente de l'amortisseur, ce dernier comprenant en outre une valve à fonctionnement sélectif destinée à fermer le passage de liquide en détente, afin d'empêcher la détente de l'amortisseur tout en permettant toute nouvelle compression de ce dernier.

Le passage de liquide en détente peut être ménagé dans l'épaisseur de la paroi du cylindre, et la valve manoeuvrée manuellement, par exemple par rotation, entre une position d'ouverture et une position de fermeture de ce passage. Mais le passage de liquide en détente peut également être ménagé dans un logement à l'intérieur d'une partie de diamètre réduit qui prolonge la tige creuse au-delà du piston, cette partie de diamètre réduit traversant le fond supérieur du cylindre pour faire saillie au-dessus de ce dernier. La valve est alors une valve à coulissement axial entre deux positions dans le logement, et rappelée par un ressort dans une position dans laquelle elle permet l'écoulement de liquide par le passage en détente. Cette valve peut alors être commandée par un câble attaché à la valve, traversant la partie de diamètre réduit de la tige, et relié à un levier de manoeuvre, actionné manuellement, et monté pivotant sur l'extrémité en saillie de cette partie de diamètre réduit, au-dessus du cylindre. En variante, le levier de traction du câble de commande de la valve peut être déplacé par un petit vérin hydraulique à double effet, connecté au circuit hydraulique de l'hélicoptère et commandé depuis le poste de pilotage de ce dernier.

Lorsqu'un hélicoptère dont les atterrisseurs sont équipés d'un tel amortisseur de suspension s'est posé sur une plate-forme instable, et après la compression initiale des amortisseurs, à l'impact, suivie d'une éventuelle détente jusqu'à leur position comprimée sous charge statique (correspondant au poids de l'hélicoptère), la manoeuvre des valves des amortisseurs bloque efficacement tout écoulement de liquide hydraulique en retour par le passage de détente, ce qui empêche toute détente ou extension de l'amortisseur, tout en permettant toute compression ultérieure qui peut être provoquée par les mouvements de la plate-forme instable. Ainsi, les mouvements cycliques de compression et de détente des amortisseurs, provoquant leurs raccourcissements et extensions cycliques, sont empêchés pendant que l'hélicoptère est posé sur la plate-forme instable, en réduisant ainsi toute instabilité de l'hélicoptère qui en résulterait.

Comme les transferts de liquide hydraulique entre deux chambres internes de l'amortisseur restent possibles en compression, mais sont interdits en détente, on comprend que la stabilité est améliorée, non seulement par la suppression des mouvements cycliques compression-extension des amortisseurs, mais également par le fait que ces amortisseurs ne peuvent que se rétracter, ce qui abaisse le centre de gravité de l'hélicoptère, et influence favorablement sa stabilité. Cependant, en cas de sollicitation opposée des deux atterrisseurs principaux, par exemple en raison d'un fort vent latéral et/ou d'une forte inclinaison latérale de la plate-forme, qui conduit à soulager un atterrisseur par rapport à la charge statique, sans que cet atterrisseur puisse s'allonger, et à surcharger l'autre atterrisseur par rapport à la charge statique, en provoquant son raccourcissement sans qu'il puisse ensuite se rallonger pour retrouver sa longueur initiale, dès que la sollicitation différentielle est achevée, on constate que l'hélicoptère reste incliné latéralement en étant affaissé d'un côté par rapport à l'autre, ce qui n'est pas du tout favorable vis-à-vis de mouvements d'inclinaison ultérieurs de la plate-forme.

Dans le même but d'améliorer la stabilité d'un hélicoptère posé sur une surface instable ou inclinée, tel qu'un hélicoptère embarqué sur un navire, ainsi que pour faciliter certaines manoeuvres et/ou améliorer certaines caractéristiques de l'hélicoptère, par exemple son chargement et son transport dans un avion cargo, son ancrage sur une aire de parcage, par exemple dans un hangar, ainsi que pour placer l'hélicoptère posé dans une configuration surbaissée, diminuant les effets dangereux de la résonance-sol, il a déjà été proposé par le brevet français 2 340 482 et son addition 2 370 196, des amortisseurs-vérins pour atterrisseurs, en particulier atterrisseurs à balancier d'hélicoptère, assurant simultanément la fonction d'amortissement à l'atterrissage ou au décollage ainsi qu'au roulage, le support sous charge statique de l'hélicoptère à l'arrêt et posé, ainsi qu'une fonction de vérin, assurant le relevage ou la descente des atterrisseurs en vol, et le surbaissement de l'hélicoptère reposant sur ses roues, à partir de sa position sous charge statique, ainsi que le retour dans cette dernière position, à partir de la position surbaissée, grâce à une commande hydraulique particulière appliquée à un tel amortisseur-vérin d'une structure particulière.

Selon le brevet français 2 340 482, cette structure particulière comprend un amortisseur, pouvant être un amortisseur de suspension de structure classique, pour atterrisseur d'hélicoptère, comprenant notamment une tige d'amortisseur montée coulissante avec étanchéité dans une première chambre de fluide hydraulique d'un cylindre, la tige ou le cylindre renfermant une chambre de rappel élastique à basse pression, telle qu'une chambre de gaz sous pression, ainsi qu'un volume de fluide hydraulique éventuellement adjacent à la chambre à basse pression et en communication avec la première chambre du cylindre par au moins un orifice de laminage en compression, présenté, par exemple, par un piston porté par l'extrémité de la tige d'amortisseur reçue à l'intérieur du cylindre, la détente de la chambre à basse pression étant freinée par un clapet de laminage de détente, cet amortisseur étant monté en bout d'une tige de vérin, dont une première chambre fait office de cylindre pour l'amortisseur, et elle-même solidaire d'un piston de vérin monté coulissant dans un cylidre de vérin, avec lequel ce piston défini une chambre commandant la descente de l'atterrisseur lorsqu'elle est alimentée en fluide hydraulique, et commandant la mise en position surbaissée lorsqu'elle est vidée, sans modification de la charge de l'amortisseur. De plus, un piston de relevage, monté coulissant dans une seconde chambre de la tige du vérin, séparée de la première, et constituant une chambre de relevage de l'atterrisseur, permet de charger l'amortisseur en tirant la tige de ce dernier vers l'intérieur de la tige du vérin, lorsque cette seconde chambre est alimentée en fluide hydraulique et que la chambre de descente est vidée, ce qui amène l'atterrisseur en position rentrée. Un dispositif de verrouillage mécanique, par exemple à griffres, ou hydraulique, comprenant un clapet de verrouillage hydraulique à ouverture commandée, est en outre prévu pour verrouiller la tige de vérin en position sortie par rapport au cylindre de vérin, après remplissage de la chambre de descente.

Selon l'addition 2 370 196 au brevet français précité, il est prévu en outre dans l'amortisseur-vérin qui en fait l'objet une chambre supplémentaire, adjacente à la chambre de descente, dont elle est séparée par au moins un piston séparateur qui est rappelé par des moyens élastiques contre une butée, et qui est déplacé à l'encontre de ces moyens élastiques, sous l'effet des dilatations du fluide hydraulique de la chambre de descente, de sorte que cette chambre supplémentaire constitue une chambre d'accumulation des dilatations de ce fluide hydraulique. Pour que cette chambre supplémentaire joue également le rôle de chambre d'acculumation des dilatations du fluide hydraulique de la chambre de relevage, la partie de la seconde chambre qui n'est pas occupée par la chambre de relevage est de plus mise en communication avec la chambre de descente. Les moyens élastiques peuvent consister en un ressort disposé dans la chambre d'accumulation des dilatations, qui est remplie de fluide hydraulique et en communication avec un clapet de dilatation autorisant, selon les besoins, une vidange partielle de la chambre d'accumulation lorsque le piston séparateur est déplacé contre le ressort par la dilatation du fluide hydraulique, ainsi qu'une réalimentation de la chambre d'accumulation lors de l'application d'une pression de descente dans la chambre de descente, mais il est préférable que la chambre d'accumulation des dilatations renferme un gaz sous pression, constituant un ressort pneumatique, et simultanément une chambre d'amortissement supplémentaire, dont les effets s'ajoutent à ceux de l'amortisseur oléo-pneumatique équipant l'amortisseur-vérin. Dans ce cas, il est avantageux que la butée contre laquelle les moyens élastiques appliquent le piston séparateur soit constituée sous la forme d'une paroi interne au cylindre, munie d'au moins un orifice axial débouchant sur au moins un clapet de laminage situé entre la paroi et le piston séparateur, de façon à constituer un second amortisseur.

Dans tous les cas, les variations de longueur de l'amortisseur-vérin pour le faire passer de l'une à l'autre des deux positions caractéristiques qui sont la position relevée et la position sortie, ainsi que de l'une à l'autre des deux autres positions caractéristiques qui sont la position sous charge statique et la position surbaissée, sont obtenues par le seul transfert du fluide hydraulique du circuit de vérin, indépendant des fluides de l'amortisseur, vers les chambres de descente et de relevage, ou vers l'extérieur à partir de ces chambres.

Afin d'améliorer les capacités d'absorption d'énergie aux grandes vitesses d'impact, sans perdre les avantages propres aux amortisseurs et amortisseur-vérin capables d'adopter une position surbaissée, à partir de la position sous charge statique, il a été proposé dans le brevet français 2 461 852 que la pression de fluide hydraulique, régnant dans une première chambre d'un cylindre d'amortisseur dans laquelle coulisse une tige d'amortisseur, soit appliquée sur un fond mobile, lui-même en appui contre un élément à seuil d'effort, autorisant une course du fond mobile lors d'une charge en compression de l'amortisseur, à partir d'un effort supérieur à un seuil donné, et indépendamment de la vitesse d'enfoncement de la tige d'amortisseur dans le cylindre, cet élément à seuil d'effort étant constitué de préférence par une chambre de rappel élastique à haute pression, dont la détente est freinée par un clapet de laminage de détente. Dans le cas d'un amortisseur-vérin, le cylindre comprend de plus une seconde chambre de fluide hydraulique, dans laquelle une tige de vérin est montée coulissante avec étanchéité et définit respectivement par sa face interne et par sa face externe, une chambre de descente et une chambre de relevage, susceptibles d'être alimentées en fluide hydraulique pour assurer respectivement la sortie et la rentrée de la tige de vérin de ou dans la seconde chambre du cylindre. De plus, dans le cas d'un amortisseur-vérin pour atterrisseur relevable, un piston de traction peut être monté coulissant avec étanchéité, d'une part, à l'intérieur de la première chambre du cylindre, et, d'autre part, autour de l'extrémité de la tige d'amortisseur interne à la première chambre du cylindre, pour définir avec ce cylindre une chambre de rétraction destinée à être alimentée en fluide hydraulique afin d'appliquer le piston de rétraction contre une butée solidaire de la tige d'amortisseur, et commander la rétraction de cette dernière dans la première chambre du cylindre, afin d'obtenir la longueur minimale de l'amortisseur-vérin lorsque la tige de vérin est simultanément rentrée.

Dans un tel amortisseur-vérin, la première chambre, l'élément à seuil d'effort et la seconde chambre peuvent être disposés à la suite l'un de l'autre dans le cylindre, la première chambre étant délimitée entre l'extrémité de la tige d'amortisseur reçue dans le cylindre et le fond mobile, et la seconde chambre étant séparée de l'élément à seuil effort par une cloison transversale du cylindre. Mais il est également possible que la première chambre soit délimitée entre la tige d'amortisseur et un fond fixe du cylindre muni de passage de communication avec une chambre annexe dans laquelle est logé l'élément à seuil d'effort. Cette chambre annexe peut être une chambre annulaire du cylindre, entourant la première chambre, et dans laquelle le fond mobile est constitué sous la forme d'un piston annulaire monté coulissant, ou bien la chambre annexe est contenue dans une bouteille extérieure au cylindre, dans laquelle le fond mobile est un piston séparateur monté coulissant, séparant du fluide en communication permanente avec la première chambre du cylindre, et un ressort pneumatique constituant une chambre de gaz à haute pression, dont les effets se combinent à ceux de la chambre de gaz à basse pression logée dans la tige d'amortisseur, de sorte que l'amortisseur soit du type bi-chambre.

Dans ces différentes variantes également, les variations de longueur des amortisseurs ou amortisseur-vérins, pour passer de l'une à l'autre des deux positions caractéristiques que sont la position sous charge statique et la position surbaissée, ainsi, éventuellement, que pour passer de l'une à l'autre des deux positions caractéristiques que sont la position atterrisseur sorti et la position atterrisseur rentré, sont obtenues grâce à la vidange ou au remplissage des chambres de relevage, de descente, et éventuellement de rétraction en fluide hydraulique d'un circuit de vérin, indépendant des fluides d'amortisseur, et sans modification de la souplesse définie par le ou les volumes de gaz sous pression de l'amortisseur.

Les mêmes conclusions peuvent être adoptées à propos de l'amortisseur-vérin à fond mobile décrit dans le brevet français 2 493 444, qui ne se distingue de l'objet du brevet français 2 461 852 que par la présence d'un piston séparateur supplémentaire coulissant avec étanchéité à l'intérieur de la tige d'amortisseur pour séparer, dans cette dernière, une chambre inférieure de gaz sous pression d'une chambre supérieure de fluide hydraulique.

Toujours dans le même but d'améliorer la stabilité des hélicoptères embarqués, par abaissement de leur centre de gravité, ainsi que pour diminuer leur encombrement dans une soute d'un avion cargo ou dans un hangar de navire, il a été proposé par le brevet français 2 554 415 un atterrisseur orientable équipé d'un amortisseur de suspension, d'un dispositif d'affaissement de l'atterrisseur, et d'un dispositif de direction ou d'orientation, commandé par le pilote pour faciliter les manoeuvres de parcage. Le dispositif d'affaissement comprend deux vérins, dont l'un est un vérin externe ou annulaire, à chambre délimitée à l'intérieur d'un caisson cylindrique d'atterrisseur et autour du tube externe d'une tige à deux tubes coaxiaux de sections différentes, reliés par un fond à l'une de leurs extrémités, et entre lesquels coulisse un cylindre définissant l'amortisseur avec la tige, et dont l'autre est un vérin interne à chambre délimitée dans le tube interne de la tige, au-dessus d'un piston séparateur la séparant d'une chambre de gaz de l'amortisseur. L'alimentation et la vidange de la chambre de vérin annulaire en fluide hydraulique provenant d'un circuit de vérin indépendant des fluides de l'amortisseur assurent respectivement la descente et le relevage de l'amortisseur dans son ensemble par rapport au caisson d'atterrisseur, de sorte que la variation de longueur entre l'extrémité supérieure du caisson et la ou les roues portées par l'extrémité inférieure du cylindre d'amortisseur, est sans incidence sur l'élasticité de l'amortisseur. La vidange de la chambre de vérin interne permet d'augmenter le volume de la chambre de gaz de l'amortisseur, mais, comme celui-ci est sous charge statique, cette augmentation de volume est compensée par l'élévation du niveau de fluide hydraulique à l'intérieur du tube interne de la tige d'amortisseur, jusqu'à revenir au même niveau de pression statique sur le même volume de gaz, bien que l'atterrisseur soit raccourci par la rentrée du cylindre entre les deux tubes de la tige, mais sans modification de son élasticité.

Enfin, il a été proposé par le brevet français 849 258 un train d'atterrissage pour avions qui est relevable et rétractable au cours du relevage. Chaque atterrisseur supporte un amortisseur oléo-pneumatique avec une tige contenant une chambre de gaz sous pression et dont l'extrémité inférieure comporte une roue, tandis que son extrémité supérieure porte un piston par lequel elle est montée coulissante avec étanchéité à l'intérieur d'un cylindre rempli de fluide hydraulique dans sa chambre au-dessus du piston et dans la chambre annulaire autour de la tige et sous le piston, ce dernier étant percé d'orifices de laminage dont certains coopèrent avec un diaphragme, pour laminer le transfert de fluide hydraulique du cylindre vers l'intérieur de la tige, en comprimant la chambre de gaz contenue dans celle-ci, et dont le fluide hydraulique est séparé par un piston séparateur. L'extrémité inférieure de la chambre annulaire inférieure du cylindre est en communication avec l'entrée d'un récipient auxiliaire aménagé en cloche de gaz, par l'intermédiaire d'une canalisation souple et d'un clapet qui freine la vidange de cette chambre annulaire, et donc la sortie de la tige, mais facilite le remplissage de cette chambre annulaire à partir d'une réserve de fluide hydraulique dans la cloche de gaz, lors des rentrées de la tige dans le cylindre. L'extrémité supérieure de la chambre supérieure de ce dernier est également reliée à l'entrée du récipient auxiliaire par l'intermédiaire de canalisations souples et d'une boîte à clapet qui ferme normalement la communication entre le cylindre et le récipient auxiliaire, et qui est commandée par la pression hydraulique de manoeuvre d'un vérin de relevage de l'atterrisseur, afin que cette communication soit ouverte lors de la rentrée de la tige dans le cylindre, au relevage, rentrée qui est provoquée par traction sur la tige à l'aide d'un câble. On transfère ainsi de la chambre supérieure du cylindre au récipient auxiliaire le volume de fluide hydraulique chassé du cylindre par la rentrée de la tige et qui n'est pas nécessaire à compenser l'augmentation de volume de la chambre annulaire inférieure, sans avoir à charger exagéremment l'amortisseur. En configuration normale, lorsque la boîte à clapet est fermée, l'élasticité de la suspension est toujours déterminée par la chambre de gaz sous pression dans la tige d'amortisseur. En supposant que, dans une configuration anormale, l'amortisseur soit amené à fonctionner alors que la boîte à clapet est ouverte, on comprend que l'élasticité de la suspension serait alors définie non seulement par la chambre de gaz sous pression contenue dans la tige d'amortisseur, mais également par la chambre de gaz contenue dans le récipient auxiliaire, de sorte que la suspension ne peut être que plus souple, ce qui n'est pas approprié à l'augmentation de la stabilité d'un aéronef qui serait équipé de tels atterrisseurs.

Le but de l' invention est de remédier aux inconvénients et/ou insuffisances des amortisseurs pour atterrisseurs d'hélicoptères embarqués de l'état de la technique, aménagés pour améliorer leur stabilité, en raidissant les amortisseurs ou en les durcissant après une course de compression faisant suite à l'atterrissage.

L'invention a ainsi pour but de proposer un dispositif destiné à être monté sur les amortisseurs oléo-pneumatiques de suspension des atterrisseurs, notamment principaux, d'hélicoptères embarqués, afin de réduire, et même de supprimer en pratique, après l'atterrissage ou l'appontage, la souplesse de tels amortisseurs, et à augmenter ainsi de façon significative la stabilité dynamique en roulis des hélicoptère embarqués ainsi équipés.

Lorsque les amortisseurs équipés du dispositif selon l'invention ne comportent pas, par ailleurs, de moyens permettant d'assurer leur rétraction pour atteindre une position surbaissée à partir de la position sous charge statique, afin d'améliorer la stabilité de l'hélicoptère par abaissement de son centre de gravité, l'invention a également pour but de proposer un dispositif permettant simultanément d'assurer une telle rétraction.

L'idée de base de l'invention consiste à assurer le blocage ou verrouillage de l'amortisseur sur l'un des fluides d'amortisseur (fluide hydraulique incompressible et fluide compressible ou gaz), après avoir transféré au moins partiellement à l'extérieur de l'amortisseur, l'un au moins des fluides d'amortisseur, ce transfert de fluide pouvant entraîner dans une configuration propre à l'invention, une rétraction simultanée de l'amortisseur.

On connaît déjà par le document US-4.720.085 un amortisseur à une chambre de détente, dont le fluide compressible est partiellement contenu dans un accumulateur extérieur à l'amortisseur. Des moyens sont prévus pour isoler ce fluide compressible dans l'accumulateur, de l'amortisseur. Une telle isolation entraîne la rigidification de l'amortisseur.

Cependant, l'amortisseur décrit dans ce document US-4.720.085 ne comprend qu'une seule chambre de détente.

L'invention permet quant à elle une réduction plus substantielle de l'élasticité de l'amortisseur.

A cet effet, l'invention propose un amortisseur oléo-pneumatique de suspension pour atterrisseur d'aérodyne, en particulier d'hélicoptère embarqué, selon la revendication 1

Il est est ainsi possible, après ou au cours d'un atterrissage ou appontage dans des conditions normales, et en conséquence de la compression de l'amortisseur qui en résulte, et qui correspond à un certain enfoncement de la tige d'amortisseur dans le cylindre, de transférer par les moyens commandés d'obturation en position ouverte, au moins une partie d'au moins un fluide de la chambre de détente de l'amortisseur vers l'accumulateur et ensuite, par la fermeture des moyens commandés d'obturation, d'isoler l'amortisseur des effets de la compression ou de la détente d'au moins une partie, mais de préférence de la totalité, du volume de fluide compressible qui est retenu dans l'accumulateur, et en particulier du volume de fluide compressible initialement pressurisé à la plus faible pression, lorsque l'accumulateur comporte plusieurs chambres de détente. Il en résulte donc bien une diminution, voire une suppression de la souplesse sur le volume de fluide compressible, ou sur celui de ces volumes à la plus faible pression initiale, c'est-à-dire, dans tous les cas, un durcissement de l'amortisseur, et donc une augmentation de la stabilité dynamique de l'hélicoptère.

Dans un mode de réalisation préféré du dispositif selon l'invention, convenant à tous les amortisseurs de suspension d'atterrisseur, qu'ils soient pourvus ou dépourvus de moyens internes ou externes particuliers permettant leur rétraction dans une position surbaissée, à partir de la position sous charge statique, et sous réserve que l'amortisseur comporte au moins une chambre de détente dont un volume de fluide compressible, formé par une chambre de gaz pressurisé, de préférence à la plus faible pression initiale, et un volume adjacent de fluide hydraulique sont logés dans le corps et/ou la tige d'amortisseur, le dispositif selon l'invention se caractérise en ce que le conduit de transfert raccorde la chambre de transfert de l'accumulateur à la chambre de gaz pressurisé dont le volume de fluide compressible est pressurisé à la pression plus faible, de sorte que du gaz pressurisé est transféré de la chambre de détente à la chambre de transfert et remplit cette dernière, lorsque l'amortisseur est sollicité en compression et après ouverture des moyens commandés d'obturation sélective, qui sont fermés au repos, pour le fonctionnement normal de l'amortisseur, et après remplissage de la chambre de transfert en gaz pressurisé, pour durcir l'amortisseur, la chambre de rappel de l'accumulateur étant raccordée à un distributeur de circuit de fluide de manoeuvre, comprenant une conduite d'alimentation en fluide de manoeuvre pressurisé et une conduite de retour du fluide de manoeuvre vers un réservoir, le distributeur étant un distributeur commandé à au moins trois voies et à au moins deux positions, dont l'une est une position de vidange de la chambre de rappel, raccordant cette dernière à la conduite de retour, et autorisant la vidange de la chambre de rappel en fluide de manoeuvre pour permettre le remplissage de la chambre de transfert en gaz comprimé, après l'ouverture des moyens commandés d'obturation sélective, et dont l'autre est une position de remplissage de la chambre de rappel, raccordant cette dernière à la conduite d'alimentation en fluide de manoeuvre pressurisé, et permettant le remplissage de la chambre de rappel en fluide de manoeuvre pressurisé pour assurer la vidange de la chambre de transfert, et le retour du gaz pressurisé dans la chambre de détente de l'amortisseur, après ouverture des moyens commandés d'obturation sélective.

Cette réalisation permet donc, après un atterrissage ou appontage effectué dans des conditions normales, et alors que les moyens commandés d'obturation sélective sont fermés, d'amener l'amortisseur en position sous charge statique, en comprimant au moins une chambre de gaz pressurisé par transfert de fluide hydraulique de la chambre de compression vers le volume adjacent de fluide hyraulique dans la chambre de détente correspondante. Par la commande de l'ouverture des moyens commandés d'obturation sélective, ainsi que par la commande du distributeur amené en position de vidange de la chambre de rappel, le gaz de la chambre de gaz pressurisé s'échappe de l'amortisseur par le conduit de transfert et remplit la chambre de transfert de l'accumulateur. Ce transfert de gaz vers l'accumulateur est compensé, dans la chambre de détente de l'amortisseur, par un passage de fluide hydraulique de la chambre de compression vers le volume adjacent de fluide hydraulique de la chambre de détente, ce qui entraîne un enfoncement supplémentaire de la tige d'amortisseur dans le cylindre d'amortisseur, donc une réduction de la dimension axiale ou longueur de l'amortisseur sous charge statique, qui permet de déplacer l'atterrisseur en position surbaissée, par rapport à la position normale sous charge statique. La fermeture des moyens commandés d'obturation sélective permet ensuite d'isoler l'amortisseur des effets de compression ou de détente du volume de gaz pressurisé transféré dans la chambre de transfert de l'accumulateur.

Cette réalisation du dispositif permet donc d'assurer simultanément la rétraction de l'amortisseur et donc de l'atterrisseur, sur une certaine longueur à partir de la position normale sous charge statique, et la suppression de la souplesse dans l'amortisseur, ce qui permet d'augmenter la stabilité d'un hélicoptère embarqué en jouant sur deux paramètres : la rétraction des amortisseurs et des atterrisseurs notamment principaux, entraîne l'abaissement du centre de gravité de l'hélicoptère posé sur la surface instable, ce qui accroît la stabilité statique en particulier latérale de l'hélicoptère, d'une part, et, d'autre part, le durcissement des amortisseurs accroît la stabilité dynamique d'ensemble de l'hélicoptère spécialement en roulis lors des mouvements de la surface instable, c'est-à-dire de la plateforme sur laquelle il est posé.

Le retour en position normale sous charge statique s'obtient en commandant l'ouverture des moyens commandés d'obturation sélective et en commandant le passage du distributeur en position de remplissage de la chambre de rappel. Cette dernièr est alors alimentée en fluide de manoeuvre sous pression, qui repousse le piston séparateur dans l'accumulateur, dans un sens qui vide la chambre de transfert du volume de gaz comprimé qu'elle contenait et qui se trouve transféré vers la chambre de détente de l'amortisseur. Ce tranfert de gaz de l'accumulateur vers l'amortisseur provoque un transfert correspondant de fluide hydraulique du volume adjacent de la chambre de détente vers la chambre de compression de l'amortisseur, ce qui entraîne la sortie de la tige d'amortisseur sur une certaine longueur hors du cylindre, et donc une extension de l'amortisseur, qui reprend sa longueur normale sous charge statique, à partir de laquelle on peut lancer le rotor pour le décollage.

Avantageusement, dans cette réalisation du dispositif, le distributeur commandé est un distributeur à trois positions, dont la troisième position est une position d'isolement de la chambre de rappel de l'accumulateur vis-à-vis des conduites d'alimentation et de retour en fluide de manoeuvre, de sorte que le distributeur assure un verrouillage de sécurité de la chambre de rappel, en particulier lorsqu'elle est remplie, ce verrouillage de sécurité palliant ainsi aux défaillances éventuelles des moyens commandés d'obturation sélective.

Avantageusement, le circuit de fluide de manoeuvre qui peut alimenter la chambre de rappel de l'accumulateur par l'intermédiaire du distributeur est un circuit hydraulique de l'hélicoptère.

Dans un mode de réalisation avantageusement simple et pratique, aux plans de la technologie et de la mise en oeuvre, les moyens commandés d'obturation sélective comprennent au moins une électro-vanne de transfert et son circuit électrique de commande, et le distributeur est un électro-distributeur, dont le circuit électrique de commande est couplé au circuit électrique de commande de l'électro-vanne, de sorte que les commandes de l'électro-vanne et de l'électro-distributeur soient synchronisées par la manoeuvre d'un unique commutateur, commandant simultanément l'ouverture de l'électro-vanne à partir de la position de repos fermée et le passage de l'électro-distributeur en position de vidange de la chambre de rappel de l'accumulateur.

Ainsi, une unique action de commande sur le commutateur permet de commander simultanément la vidange de la chambre de rappel de l'accumulateur et l'ouverture de l'électro-vanne d'entrée vers la chambre de transfert de l'accumulateur, pour l'admission dans cette dernière du gaz pressurisé provenant de la chambre de détente de l'amortisseur.

De plus et avantageusement, l'unique commutateur commande également simultanément l'ouverture de l'électro-vanne à partir de la position fermée d'isolement de la chambre de transfert, remplie de gaz, et le passage de l'électro-distributeur en position de remplissage de la chambre de rappel de l'accumulateur.

Ainsi, par une autre unique action de commande sur le commutateur, on provoque le remplissage de la chambre de rappel et l'ouverture de l'électro-vanne, permettant la vidange de la chambre de transfert et le retour du gaz pressurisé dans la chambre de détente de l'amortisseur.

Avantageusement, pour assurer une fermeture automatique de l'électro-vanne après remplissage de la chambre de transfert en gaz sous pression et vidange de la chambre de rappel de l'accumulateur en fluide de manoeuvre, le dispositif comprend également un contacteur de fin de course, sensible aux déplacements relatifs du corps d'amortisseur et de la tige d'amortisseur, et commandant la fermeture de l'électro-vanne, ou, plus généralement, des moyens commandés d'obturation sélective, lorsque ce contacteur détecte une position d'enfoncement maximum autorisé de la tige d'amortisseur dans le corps d'amortisseur, à partir de la position sous charge statique de l'amortisseur, et en raison d'un transfert de gaz de l'amortisseur vers la chambre de transfert de l'accumulateur.

Avantageusement, pour assurer une bonne synchronisation des commandes des moyens commandés d'obturation sélective et du distributeur, le contacteur de fin de course commande simultanément le passage du distributeur en position d'isolement de la chambre de rappel de l'accumulateur.

En outre, il est avantageux de réaliser l'accumulateur de sorte que son volume interne soit suffisant pour que la chambre de transfert contienne, en position de vidange de la chambre de rappel, tout le volume de gaz sous pression initialement logé dans la chambre de détente de l'amortisseur en communication avec la chambre de transfert par le conduit de transfert. Cette caractéristique permet de supprimer totalement la souplesse de l'amortisseur sur ce volume de gaz comprimé, après son transfert total dans la chambre de transfert et après fermeture des moyens commandés d'obturation sélective.

Afin de faciliter, d'une part, le raccordement de l'amortisseur à l'accumulateur, et, d'autre part, le gonflage initial en gaz comprimé de la chambre de détente raccordée à la chambre de transfert de l'accumulateur, il est avantageux que le conduit de transfert comprenne un raccord en T, fixé sur l'amortisseur, et raccordant la chambre de détente en parallèle aux moyens commandés d'obturation sélective et à une valve de gonflage en gaz sous pression, les moyens commandés et la valve de gonflage étant fixés directement au raccord en T.

Dans ce cas, afin de diminuer la longueur du conduit de transfert, il est avantageux que l'accumulateur soit destiné à être fixé directement sur l'amortisseur, tandis que le distributeur et les conduites d'alimentation et de retour du circuit de fluide de manoeuvre, ainsi que l'essentiel des circuits électriques de commande, lorsque les moyens commandés d'obturation sélective comprennent une électro-vanne, et lorsque le distributeur est un électro-distributeur, sont destinés à être montés sur l'hélicoptère, le distributeur étant raccordé à l'accumulateur par une canalisation souple.

Dans un second exemple de réalisation du dispositif selonl'invention, simplifié par rapport au premier exemple présenté ci-dessus, et destiné de préférence à être utilisé sur un amortisseur déjà muni d'un dispositif de rétraction, permettant de raccourcir l'amortisseur à partir de sa position sous charge statique, pour amener l'atterrisseur dans une position surbaissée, le dispositif selon l'invention se caractérise en ce que le volume de fluide compressible de la chambre de détente raccordée à l'accumulateur est un volume de gaz sous pression logé dans la chambre de rappel de l'accumulateur, et séparé par le piston séparateur de ce dernier du fluide incompressible du volume adjacent de cette même chambre de détente, qui est transféré de l'amortisseur dans la chambre de transfert de l'accumulateur en comprimant la chambre de rappel, lorsque l'amortisseur est sollicité en compression, de sorte que la fermeture des moyens commandés d'obturation sélective, qui sont ouverts au repos, durcit l'amortisseur en l'isolant du gaz sous pression dans la chambre de rappel.

Un tel dispositif permet, sans modifier sensiblement un amortisseur comportant déjà une capacité de rétraction, d'ajouter la fonction de suppression de la souplesse sur la chambre de gaz comprimé logé dans la chambre de transfert de l'accumulateur pour accroître la stabilité dynamique de l'hélicoptère.

Dans ce second exemple de réalisation, comme l'accumulateur constitue fonctionnellement le prolongement de la chambre basse pression de l'amortisseur à l'extérieur de ce dernier, et au travers des moyens commandés d'obturation sélective, une valve de gonflage en gaz sous pression ainsi qu'une sonde de pression sont avantageusement montées sur l'accumulateur, et débouchent dans une partie d'extrémité de la chambre de rappel, du côté opposé au piston séparateur, afin de permettre respectivement le gonflage de la chambre de rappel et la surveillance de l'évolution de la pression dans cette chambre.

Dans cet exemple également, les moyens commandés d'obturation sélective comprennent avantageusement, pour des raisons de simplification de réalisation et de commande, une électro-vanne bistable qui est commutée de sa position d'ouverture à sa position de fermeture par des impulsions de commande, délivrées par un contacteur de commande, par exemple à bouton-poussoir, de son circuit électrique de commande.

Dans un mode de réalisation, qui convient particulièrement bien à des atterrisseurs non relevables en vol, l'accumulateur est destiné à être fixé à l'amortisseur, tandis que le contacteur du circuit électrique de commande de l'électro-vanne est destiné à être monté sur l'hélicoptère, et de préférence dans le poste de pilotage de ce dernier.

Mais, dans le cas d'un atterrisseur relevable en vol, et pour que la présence de l'accumulateur ne puisse pas constituer une gêne pour la manoeuvre de l'atterrisseur, l'accumulateur peut être destiné à être fixé sur l'hélicoptère et est raccordé à l'amortisseur par un conduit souple.

Le dispositif selon l'invention, pour la réduction de la souplesse d'un amortisseur oléo-pneumatique de suspension d'atterrisseur, peut être un dispositif additionnel, qui s'ajoute à un amortisseur équipant déjà un atterrisseur d'hélicoptère, et qui est destiné à ne plus être désaccouplé de l'amortisseur. Mais le dispositif selon l'invention peut également être réalisé sous la forme d'un dispositif optionnel, que l'on accouple à l'amortisseur ou que l'on désaccouple de ce dernier selon les besoins. Enfin, le dispositif selon l'invention peut être combiné dès l'origine à un amortisseur de suspension d'atterrisseur ou à l'atterrisseur concerné.

De ce fait, l'invention a également pour objet un amortisseur oléo-pneumatique de suspension pour atterrisseur d'aérodyne, du type comprenant un corps d'amortisseur, au moins un piston d'amortisseur et au moins une tige d'amortisseur montée coulissante avec étanchéité dans le corps, et qui définissent dans l'amortisseur au moins une chambre de compression, contenant un fluide hydraulique sensiblement incompressible, et au moins une chambre de détente, contenant au moins un volume de fluide hydraulique adjacent à au moins un volume d'un fluide compressible et sous pression, et en communication avec la chambre de compression par l'intermédiaire de moyens de laminage, qui délimitent au moins un passage de laminage en compression du fluide hydraulique chassé de la chambre de compression vers le volume adjacent de fluide hydraulique de la chambre de détente, lorsque l'amortisseur est sollicité en compression, et au moins un passage de laminage en détente du fluide hydraulique chassé du volume adjacent de la chambre de détente vers la chambre de compression, lorsque l'amortisseur est sollicité en détente, l'amortisseur oléo-pneumatique selon l'invention étant caractérisé en ce qu'il comprend également un dispositif de réduction de sa souplesse et tel que défini ci-dessus.

Si l'amortisseur est du type comprenant deux chambres de détente dont l'une comporte une chambre de gaz à haute pression et l'autre une chambre de gaz à basse pression et est au moins partiellement logée dans le corps d'amortisseur, la chambre de transfert de l'accumulateur est alors avantageusement raccordée par le conduit de transfert au corps d'amortisseur et débouche dans la partie logée dans ce corps de la chambre de détente ayant la chambre de gaz à basse pression.

Dans une forme de réalisation particulièrement avantageuse sur le plan de la simplicité de structure, de sa compatibilité avec la structure des atterrisseurs appropriés au montage sur hélicoptères, et de sa compatibilité avec le dispositif de réduction de la souplesse selon l'invention, le corps de l'amortisseur comporte un cylindre externe et un cylindre interne disposé sensiblement coaxialement dans le cylindre externe, les deux cylindres étant fermés par un fond à leurs extrémités situées d'un même côté axial, et ouverts à leurs extrémités opposées, l'amortisseur comporte une unique tige d'amortisseur creuse, ouverte à une extrémité qui est engagée entre les deux cylindres, à fond fermé à son extrémité opposée, et montée axialement coulissante avec étanchéité entre les deux cylindres, les moyens de laminage sont disposés sensiblement au niveau de l'extrémité ouverte du cylindre interne, et, au repos, du fluide hydraulique remplit une chambre de compression, délimitée dans la tige, entre son fond et les moyens de laminage, et se trouve en communication au-travers des moyens de laminage, avec, d'une part, une première chambre de détente, de forme annulaire, délimitée par la tige entre les deux cylindres, et contenant un volume de fluide hydraulique adjacent aux moyens de laminage ainsi qu'à une chambre de gaz à basse pression, et, d'autre part, une seconde chambre de détente, délimitée dans le cylindre interne et contenant une chambre de gaz à haute pression ainsi qu'un volume adjacent de fluide hydraulique, qui est isolé du fluide hydraulique des autres chambres par un piston séparateur monté coulissant avec étanchéité dans le cylindre interne, le conduit de transfert à l'accumulateur débouchant par un raccord dans la partie d'extrémité de la chambre de détente annulaire qui est voisine du fond des cylindres.

Cet amortisseur peut être tel qu'au repos, la chambre de gaz à basse pression soit également logée dans la chambre de détente annulaire, auquel cas le dispositif de réduction de la souplesse est un dispositif selon le premier exemple préféré de réalisation présenté ci-dessus, permettant simultanément la suppression de l'élasticité sur cette chambre de gaz à basse pression, et une rétraction en longueur de l'amortisseur, à partir de sa position sous charge statique.

Mais il est également possible qu'au repos la chambre de gaz à basse pression soit logée dans la chambre de rappel de l'accumulateur et soit isolée du fluide hydraulique adjacent dans la chambre de détente annulaire et dans la chambre de transfert de l'accumulateur par le piston séparateur monté dans ce dernier, auquel cas le dispositif de réduction de la souplesse est un dispositif selon le second exemple présenté ci-dessus, assurant la suppression de l'élasticité sur la chambre de gaz à basse presssion sans permettre par lui-même une rétraction supplémentaire de l'amortisseur.

L'invention a enfin pour objet un atterrisseur pour aérodyne, en particulier un atterrisseur principal d'hélicoptère embarqué, comprenant un caisson de jambe lié à la structure de l'aérodyne, au moins un organe de contact avec le sol, tel qu'une roue, et au moins un amortisseur oléo-pneumatique de suspension, relié au caisson de jambe et à l'organe de contact avec le sol, de façon à amortir les mouvements relatifs entre cet organe et le caisson de jambe, l'amortisseur oléo-pneumatique étant un amortisseur selon l'invention, équipé d'un dispositif de réduction de la souplesse également selon l'invention.

Dans un mode de réalisation préféré pour une utilisation comme atterrisseur principal d'hélicoptères embarqués, l'atterrisseur est à coulissement direct, le corps de son amortisseur constituant simultanément le caisson de jambe, et l'organe de contact avec le sol étant porté par l'extrémité de la tige d'amortisseur qui est externe au corps d'amortisseur.

Mais il est également possible que l'atterrisseur selon l'invention soit du type à balancier, dans lequel l'organe de contact avec le sol est porté par l'extrémité inférieure du caisson de jambe incliné et articulé par son extrémité supérieure sur la structure de l'aérodyne, l'amortisseur étant articulé par son corps également sur la structure de l'aérodyne et par l'extrémité de sa tige, externe au corps d'amortisseur, sur le caisson de jambe, ou encore d'un autre type à balancier, dans lequel l'organe de contact avec le sol est porté par l'extrémité inférieure d'un balancier incliné et articulé par son extrémité supérieure sur l'extrémité inférieure du caisson de jambe, lui-même relié par son extrémité supérieure à la structure de l'aérodyne, l'amortisseur étant articulé par son corps sur le caisson de jambe et par l'extrémité de sa tige, externe au corps d'amortisseur, sur le balancier.

L'invention sera mieux comprise, et d'autres caractéristiques et avantages de l'invention apparaîtront à la lecture de la description donnée ci-dessous à titre non limitatif, de deux exemples de réalisation obtenus à partir de la même structure de base d'amortisseur oléo-pneumatique, et en référence aux dessins annexés sur lesquels :
- la figure 1 représente en coupe schématique axiale un amortisseur oléo-pneumatique à deux chambres de gaz au début de sa phase de compression, à l'atterrissage, à partir de sa position d'extension maximale,
- la figure 2 représente, en coupe analogue à celle de la figure 1, l'amortisseur de la figure 1 en fin de phase de compression, et à proximité de sa position d'équilibre sous charge statique,
- les figures 3 et 4 représentent, à plus grande échelle, une partie de l'amortisseur des figures 1 et 2, et montrent les positions occupées par les moyens de laminage respectivement en compression et en détente de l'amortisseur,
- la figure 5 représente l'amortisseur de la figure 1 sur lequel est monté un premier exemple de dispositif de réduction de la souplesse, et
- la figure 6 représente l'amortisseur de la figure 1 sur lequel est monté un second exemple de dispositif de réduction de sa souplesse.

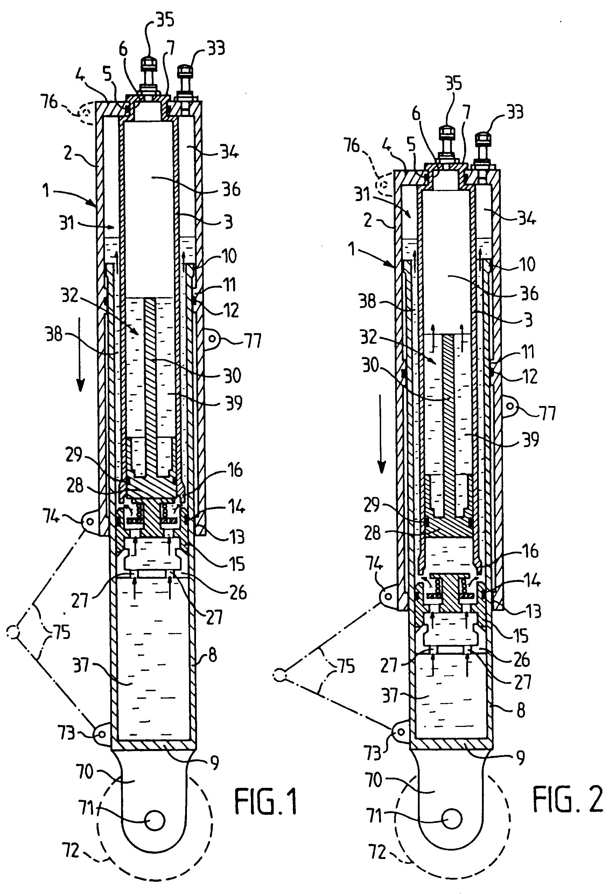

En référence aux figures 1 à 4, l'amortisseur oléo-pneumatique de supsension d'un atterrisseur principal pour hélicoptères embarqués comprend un corps 1, constitué de deux tubes cylindriques 2 et 3, de sections différentes, disposés sensiblement coaxialement l'un dans l'autre et sensiblement de même longueur. Les deux cylindres 2 et 3 sont fermés à leur extrémité supérieure, le cylindre externe 2 par un fond annulaire 4 entourant de manière étanche, grâce à un joint d'étanchéité statique 5, la partie d'extrémité supérieure de plus petite section 6 du cylindre interne 3, cette partie 6 étant elle-même fermée par un fond 7, et raccordée au reste du cylindre interne 3 par un épaulement d'appui contre le fond annulaire 4 du cylindre externe 2. Les deux cylindres 2 et 3 du corps 1 sont ouverts à leur extrémité inférieure.

L'amortisseur comprend également une tige 8, qui est tubulaire, cylindrique, fermée à son extrémité inférieure par un fond 9, et ouverte à son extrémité supérieure, qui est engagée entre les deux cylindres 2 et 3 du corps 1 et conformée en piston annulaire 10, en saillie radialement vers l'extérieur, pour assurer le guidage, contre la face interne du cylindre externe 2, de la tige 8 montée coulissante axialement dans le corps 1, entre les deux cylindres 2 et 3 de ce dernier. Le guidage de la tige 8, coulissant avec étanchéité dans le corps 1, est de plus assuré par une portée cylindrique 11, en saillie radiale interne sur la face interne du cylindre externe 2, sensiblement à mi-hauteur de ce cylindre 2. Cette portée de guidage 11 est munie d'un joint d'étanchéité dynamique 12 qui coopère avec la face latérale externe de la partie supérieure de la tige 8 qui se trouve engagée entre les deux cylindres 2 et 3. Au niveau des extrémités inférieures des cylindres 2 et 3, le guidage étanche de la tige 8 est également assuré par une portée cylindrique 13, en saillie radiale vers l'intérieur à l'extrémité inférieure du cylindre externe 2, ainsi que par un joint d'étanchéité dynamique 14 en regard, disposé dans une gorge circulaire ménagée dans la face latérale externe d'un manchon cylindrique 15, solidaire de l'extrémité inférieure 16 du cylindre interne 3, tout en étant d'un diamètre externe supérieur à celui de cette extrémité inférieure 16, elle-même surépaissie par rapport à l'épaisseur du cylindre 3, le manchon 15 prolongeant sensiblement vers le bas le cylindre interne 3, et entourant des moyens de laminage décrits ci-dessous. Dans sa partie qui pénètre dans le corps 1, la tige 8 coulisse par sa face latérale externe contre la portée 13 du cylindre externe 2 et par sa face latérale interne contre la face latérale externe du manchon 15 portant le joint d'étanchéité dynamique 14.

Ainsi, les volumes délimités à l'intérieur de la tige 8, à l'intérieur du cylindre interne 3, ainsi qu'entre les deux cylindres 2 et 3 et au-dessus de la portée 11, sont des volumes isolés de manière étanche de l'extérieur de l'amortisseur.

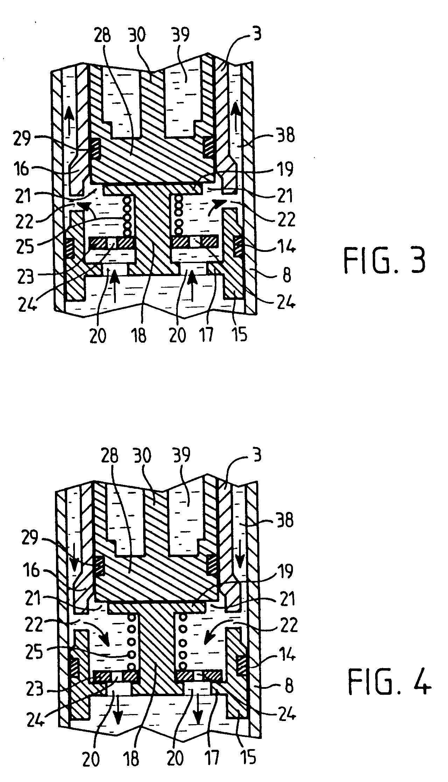

Le manchon 15 est solidarisé à l'extrémité inférieure 16 du cylindre interne 3 par une paroi transversale 17, d'une seule pièce avec un noyau central et axial 18 lui-même fixé à l'extrémité inférieure 16 par une paroi transversale supérieure 19. Les parois transversales 17 et 19 sont chacune percées d'orifices axiaux respectivement 20 et 21 (voir figures 3 et 4), tandis que des passages radiaux 22 sont dégagés entre l'extrémité inférieure 16 du cylindre interne 3 et le manchon 15. De plus, un diaphragme 23, constitué d'un disque annulaire monté coulissant axialement autour du noyau central 18 et à l'intérieur du manchon 15, entre les parois transversales 17 et 19, et percé d'orifices axiaux 24 en regard des orifices 20 de la paroi transversale 17, mais de plus petite section que ces orifices 20, est appliqué contre la paroi transversale 17, formant un siège pour ce clapet-diaphragme 23, par un ressort hélicoïdal 25 monté autour du noyau central 18 et prenant appui, d'une part, contre la paroi transversale supérieure 19, et, d'autre part, contre le clapet-diaphragme 23.

Les moyens de laminage ainsi constitués, et dont le fonctionnement est décrit ci-dessous, sont complétés par une cuvette de laminage 26, disposée dans la tige 8, sous le manchon 15, cette cuvette 26 ayant un fond transversal percé d'orifices axiaux 27 formant des orifices permanents de laminage.

La structure de l'amortisseur est complétée par la présence d'un piston séparateur 28 monté coulissant avec étanchéité à l'intérieur du cylindre interne 3, grâce à un joint d'étanchéité dynamique 29 monté sur ce piston séparateur 28 qui comporte une queue axiale 30 dirigée vers le fond supérieur 7 du cylindre interne 3.

Les volumes internes à l'amortisseur et isolés de l'extérieur sont remplis d'un fluide hydraulique, à l'exception de la partie supérieure de la chambre annulaire 31, délimitée entre les deux cylindres 2 et 3 et à l'intérieur de la partie de tige 8 interne au corps 1, jusqu'aux passages radiaux 22, ainsi qu'à l'exception de la partie supérieure de la chambre 32 interne au cylindre interne 3, entre le fond 7 de ce dernier et le piston séparateur 28. En effet, la partie supérieure de la chambre annulaire 31 est remplie d'un volume de gaz, tel que de l'azote, introduit sous basse pression au-travers du fond 4 du cylindre externe 2 par une valve de gonflage 33, de façon à former, dans la partie supérieure de la chambre 31, une chambre de gaz à basse pression 34. De même, un volume de gaz, par exemple d'azote, est introduit, mais sous haute pression dans la partie supérieure de la chambre 32, au-travers du fond 7 du cylindre interne 3, par une autre valve de gonflage 35, de façon à former une chambre pneumatique à haute pression 36.

On obtient ainsi un amortisseur oléo-pneumatique dont la tige 8 contient une chambre de fluide hydraulique 37, entre le fond 9 et les moyens de laminage, et appelée chambre de compression, car le fluide hydraulique qu'elle contient est comprimé lorsque l'amortisseur est sollicité en compression, dans un sens qui tend à faire rentrer la tige 8 dans le corps 1. Ce dernier contient une chambre de détente à basse pression 31, et une chambre de détente à haute pression 32, comprenant chacune une chambre de gaz, respectivement à basse pression 34 et à haute pression 36, adjacente à un volume de fluide hydraulique respectivement 38 et 39, le volume 38 s'étendant jusqu'aux orifices radiaux 22 et le volume 39 n'étant séparé des orifices axiaux 21 que par le piston séparateur 28, lequel est appliqué au repos, en position initiale, en butée contre la paroi transversale 19 fixée à l'extrémité inférieure 16 du cylindre interne 3, sous l'effet de la poussée résultant de la chambre de gaz à haute pression 36, qui tend à se détendre, tout comme la chambre de gaz à basse pression 34, ce qui a pour effet de repousser le fluide hydraulique vers l'intérieur de la tige 8, et tend ainsi à faire sortir cette dernière au maximum du corps d'amortisseur 1.

L'amortisseur dont on vient de décrire la structure fonctionne de la manière suivante : à partir de la position d'extension maximale représentée sur la figure 1, qui est celle occupée par l'amortisseur sur un atterrisseur principal sorti, s'il est relevable, ou fixé en position d'atterrissage, la phase d'atterrissage ou d'appontage se déroule de la manière suivante. Dans un premier temps, l'organe de contact avec la surface d'appontage, en général une roue, supporté directement ou indirectement par l'extrémité inférieure de la tige 8, touche cette surface, et la structure de l'hélicoptère pousse sur le corps 1 de sorte que la tige 8 commence à s'enfoncer dans le corps 1. Le volume de la chambre de compression 37 diminue, et du fluide hydraulique comprimé dans cette chambre 37 est chassé vers le volume 38 de la chambre de détente 31 à basse pression, en étant freiné et laminé au-travers des orifices permanents de laminage 27 de la cuvette 26, puis au-travers des orif ices 20 en soulevant le clapet-diaphragme 23 à l'encontre du ressort 25 et en s'écoulant entre ce clapet-diaphragme 23 et le manchon 15, puis par les orifices radiaux 22 jusqu'au volume 38. L'augmentation de ce volume 38 de fluide hydraulique dans la chambre de détente 31 entraîne une augmentation de la pression du gaz de la chambre à basse pression 34. Pendant cette phase de compression, le clapet-diaphragme 23 est sans effet sur le laminage du fluide hydraulique puisqu'il est décollé de son siège 17.

Si les accélérations verticales à l'appontage sont relativement faibles, la compression s'arrête lorsque la force exercée par le gaz sous pression de la chambre à basse pression 34 sur le fluide hydraulique équilibre la charge de l'hélicoptère sur la roue de l'atterrisseur correspondant. Dans ce cas, seule la chambre à basse pression 34 travaille.

Par contre, si les accélérations verticales à l'appontage sont importantes, le corps 1 de l'amortisseur continue à s'enfoncer sur la tige 8, et lorsque la pression de la chambre de gaz 34 devient égale à la pression de la chambre de gaz à haute pression 36, le piston séparateur 28 est repoussé par le fluide hydraulique vers le haut dans le cylindre interne 3 et comprime l'azote de la chambre haute pression 36. Dans ce cas, une partie du fluide hydraulique chassé de la chambre de compression 37 s'écoule comme précédemment par les orifices radiaux 22 vers le volume 38, tandis qu'une autre partie s'écoule par les orifices axiaux 21 vers l'intérieur du cylindre interne 3 en repoussant le piston séparateur 28. D ans ce cas, la quantité de gaz comprimé augmente, de sorte que le taux de compression de l'amortisseur diminue. En effet, la chambre à haute pression 36 accroît la capacité de l'amortisseur à s'enfoncer sous pression limitée.

Dans un second temps, lorsque la charge sur la roue s'inverse ou diminue, l'amortisseur se détend sous l'action de l'énergie emmagasinée dans le gaz comprimé de la chambre 34 et éventuellement de la chambre 36. En effet, l'azote sous pression des chambres basse pression 34 et haute pression 36 se comporte comme un ressort, emmagasinant de l'énergie lors de la compression, et la restituant pendant la détente. De ce fait, en phase de détente, le gaz repousse le fluide hydraulique vers la chambre de compression 37, dont le volume augmente, la circulation de fluide hydraulique s'effectuant au-travers des orifices radiaux 22 et, éventuellement, des orifices axiaux 21, puis au-travers des orifices calibrés de petite section 24 du clapet-diaphragme 23 appliqué contre son siège 17, puis enfin au-travers des orifices permanents de laminage de la cuvette 26. En raison du passage au-travers des petits orifices 24 du clapet - diaphragme 23, le laminage en détente est plus important qu'en compression, ce qui assure un freinage de l'amortisseur en détente. La détente de l'amortisseur, se traduisant par une sortie de la tige 8 hors du corps 1, s'arrête lorsque la charge de l'hélicoptère sur la roue correspondante de l'atterrisseur équilibre la force exercée par le gaz comprimé sur le fluide hydraulique. L'amortisseur se trouve alors dans la position dite sous charge statique.

On a représenté sur la figure 1 la position des différents éléments de l'amortisseur en début d'une phase de compression, alors que la figure 2 représente l'amortisseur sensiblement à la fin d'une phase de compression lors d'un appontage avec une accélération verticale importante, de sorte que la chambre de gaz à haute pression 36 est sollicitée par le déplacement du piston séparateur 28. Sur ces figures, comme sur les figures 3 et 4, le sens des efforts s'exerçant sur l'amortisseur ainsi que le sens de déplacement du fluide hydraulique ont été indiqués par des flèches, la figure 3 représentant clairement la structure et les positions des éléments constitutifs des moyens de laminage, en phase de compression, alors que la figure 4 représente la structure et les positions de ces mêmes éléments en phase de détente.

On note que dans cet amortisseur, le gaz est en contact avec le fluide hydraulique dans les chambres de dépression 31 et 32, ce qui est possible par le fait que le corps d'amortisseur 1 est en position haute par rapport à la tige 8. Par contre, si l'amortisseur devait être utilisé en position retournée, tige 8 vers le haut et corps 1 en bas, il conviendrait alors de séparer les chambres de gaz 34 et 36 des volumes adjacents de fluide hydraulique 38 et 39 par des pistons séparateurs.

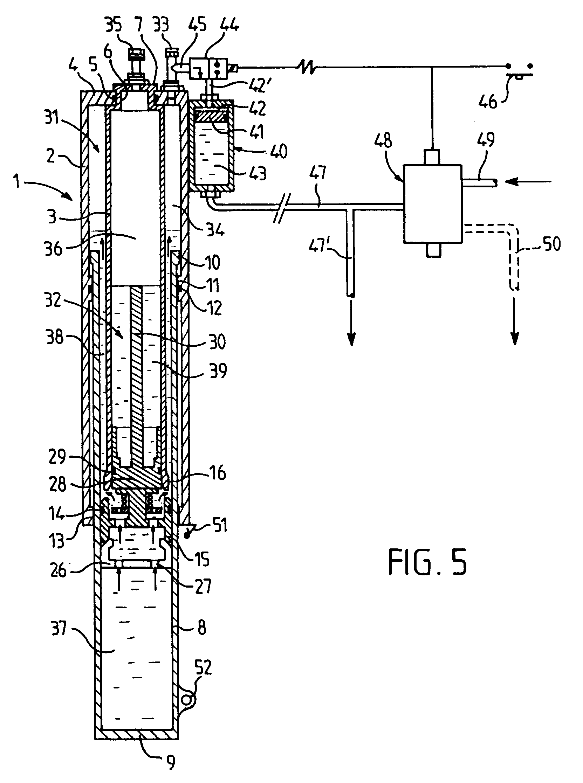

Sur la figure 5, on a représenté l'amortisseur des figures 1 à 4 équipé d'un premier exemple de dispositif de réduction de l'élasticité de l'amortissement, qui correspond au meilleur mode de réalisation de ce dispositif connu de la demanderesse à ce jour.

Ce dispositif comprend un accumulateur à tiroir 40, qui est étanche et fixé, de préférence de manière amovible par des moyens de fixation non représentés, contre l'extérieur de la partie supérieure du corps 1 d'amortisseur. Un piston séparateur 41, monté coulissant avec étanchéité à l'intérieur do l'accumulateur 40, subdivise ce dernier en deux chambres 42 et 43 isolées l'une de l'autre et dont les volumes varient en opposition par les déplacements du piston séparateur 41. La chambre supérieure 42, appelée chambre de transfert, est raccordée par un conduit de transfert 42′ à une entrée d'une électro-vanne 44 à deux voies, à deux positions et bi-stable, c'est-à-dire stable dans chacune de ses deux positions, et qui est raccordée par son autre entrée à un embout d'un raccord en T 45, qui supporte l'électro-vanne 44. Un second embout du raccord en T 45 est équipé de la valve de gonflage 33, prévue sur les figures 1 et 2 pour gonfler la chambre de gaz à basse pression 34, le troisième embout du raccord en T 45 étant monté sur le fond 4 du cylindre externe 2 du corps d'amortisseur 1, afin de permettre simultanément ce gonflage et la mise en communication de cette chambre de gaz à basse pression 34 avec l'électro-vanne 44. Cette dernière est fermée au repos, c'est-à-dire qu'elle isole la chambre 42 dans l'accumulateur 40 de la chambre de gaz à basse pression 34 dans l'amortisseur 1. Cette électro-vanne 44 peut être commutée de sa position stable de fermeture à sa position stable d'ouverture par des impulsions électriques de commande délivrées par son circuit électrique de commande comprenant un commutateur 46 réalisé sous la forme d'un contacteur à bouton-poussoir, disposé dans le poste de pilotage de l'hélicoptère.

La chambre inférieure 43 de l'accumulateur, appelée chambre de rappel, est raccordée par une tuyauterie souple 47 à une entrée d'un électro-distributeur 48 à trois voies et trois positions stables. Cet électro-distributeur 48 est monté sur la structure de l'hélicoptère et est raccordé, par une seconde voie, à une conduite d'alimentation en fluide hydraulique sous pression 49 d'un circuit hydraulique de l'hélicoptère, tandis que sa troisième voie est raccordée à une conduite 50 de retour de ce fluide hydraulique vers un réservoir de ce circuit hydraulique. L'électro-distributeur 48 est stable dans chacune de ses trois positions, dont l'une est une position d'alimentation de la chambre de rappel 43, dans laquelle la tuyauterie 47 est mise en communication avec la conduite d'alimentation 49 en fluide hydraulique sous pression, une seconde position de l'électro-distributeur 48 étant une position de vidange de la chambre de rappel 43, dans laquelle la tuyauterie 47 est mise en communication avec la conduite de retour 50, et la troisième position du distributeur 48 est une position d'isolement, dans laquelle la tuyauterie 47 est isolée des conduites d'alimentation et de retour 49 et 50. Le circuit de commande électrique de l'électro-distributeur 48 est en partie commun à celui de l'électro-vanne 44 et comprend en particulier également le contacteur à bouton-poussoir 46, de sorte que les commandes de l'électro-vanne 44 et du distributeur 48 soient synchronisées. La tuyauterie 47 présente une dérivation 47' raccordée, dans les mêmes conditions, à la chambre de rappel de l'accumulateur monté sur l'amortisseur équipant le second atterrisseur principal de l'hélicoptère.

Enfin, pour compléter la commande synchronisée de l'électro-vanne 44 et de l'électro-distributeur 48, leur circuit de commande électrique comprend également un contacteur de fin de course 51 monté à l'extrémité inférieure du cylindre externe 2 du corps d'amortisseur 1. Ce contacteur de fin de course 51 délivre des impulsions électriques de commande à l'électro-vanne 44 et à l'électro-distributeur 48 lorsqu'il se trouve actionné par une butée 52, en saillie radiale vers l'extérieur sur la partie d'extrémité inférieure de la tige 8.

L'amortisseur équipé de ce dispositif fonctionne de la manière suivante. L'hélicoptère étant en vol, les atterrisseurs étant sortis ou fixés en positon d'atterrissage, l'électro-vanne 44 est au repos fermée, de sorte que la chambre de gaz à basse pression 34 est entièrement logée dans la chambre de détente 31 de l'amortisseur, et, dans l'accumulateur 40, la chambre de transfert 42 est vide tandis que la chambre de rappel 43 est remplie de fluide hydraulique du circuit de l'hélicoptère, le piston séparateur 41 étant maintenu en position haute par le fait que l'électro-distributeur 48 occupe sa position d'isolement, en assurant ainsi un verrouillage hydraulique de sécurité pour l'électro-vanne 44.

Lorsque l'hélicoptère se pose, l'amortisseur fonctionne comme décrit précédemment en référence aux figures 1 à 4, jusqu'à prendre sa position sous charge statique, dans laquelle l'azote de la chambre à basse pression 34 est comprimé, du fait d'un certain enfoncement de la tige 8 dans le corps d'amortisseur 1.

Le fonctionnement normal de l'amortisseur n'est donc pas modifié jusqu'à ce point.

Par action sur le contacteur à bouton-poussoir 46, le pilote commande ensuite simultanément la commutation de l'électro-vanne 44 de sa position de fermeture à sa position d'ouverture, et le passage de l'électro-distributeur 48 de sa position d'isolement à sa position de vidange de la chambre de rappel 43, en mettant cette dernière en communication avec la conduite de retour 50 par la tuyauterie 47. L'ouverture de l'électro-vanne 44 permet simultanément le transfert du gaz comprimé de la chambre à basse pression 34 vers la chambre de transfert 42 de l'accumulateur 40, dont le piston séparateur est repoussé vers le bas en vidant la chambre de rappel 43. Du fait du transfert de gaz comprimé de la chambre 34 de l'amortisseur vers la chambre de transfert 42 de l'accumulateur 40, et comme l'amortisseur est sous charge statique, la tige 8 peut continuer de s'enfoncer dans le corps 1, jusqu'à ce que la butée 52 portée par la tige 8 vienne actionner le contacteur de fin de course 51. Ce dernier délivre alors des impulsions électriques de commande à l'électro-vanne 44, qui est commuté de sa position d'ouverture à sa position stable de fermeture, et à l'électro-distributeur 48, qui passe de sa position stable de vidange à sa position stable d'isolement. La position de la butée 52 sur la tige 8 est calculée pour que la butée 52 vienne actionner le contacteur de fin de course 51 lorsque tout l'azote de la chambre à basse pression 34 a été transféré dans la chambre de transfert 42 de l'accumulateur 40. Après la fermeture de l'électro-vanne 44 et l'isolement du distributeur 48, l'amortisseur se retrouve sans chambre de gaz à basse pression, et il n'offre plus qu'une possibilité de course réduite, par compression ou détente de la chambre de gaz à haute pression 36, de sorte que l'amortisseur est devenu très dur.

Tous les élements du dispositif étant au repos, l'hélicoptère peut être entreposé sans surveillance particulière dans cette position surbaissée, dans laquelle la souplesse sur la chambre basse pression a été supprimée.

On améliore ainsi la stabilité statique, par abaissement du centre de gravité de l'hélicoptère, obtenu par le raccourcissement des amortisseurs à partir de leur position sous charge statique, ainsi que la stabilité dynamique, par la suppression de la souplesse sur la chambre de gaz à basse pression.

Pour remettre l'hélicoptère en position normale, sous charge statique, une assistance hydraulique est nécessaire. Du poste de pilotage, on actionne le contacteur 46, ce qui commande le passage du distributeur 48 de sa position d'isolement à sa position d'alimentation de la chambre de rappel 43, qui est ainsi alimentée en fluide hydraulique sous pression. Simultanément, l'électro-vanne 44 est commutée en position d'ouverture, de sorte que par l'effet du remplissage de la chambre 43, et le déplacement du piston séparateur 41, la chambre de transfert 42 de l'accumulateur 40 est vidée, et le gaz contenu dans cette dernière est transféré dans la chambre de détente 31 de l'amortisseur, pour y reconstituer la chambre de gaz à basse pression 34. Le regonflement de la chambre de gaz à basse pression dans l'amortisseur déplace du fluide hydraulique vers la chambre 37 dans la tige 8, de sorte que cette dernière sort du corps d'amortisseur 1 jusqu'à rervenir dans la position de l'amortisseur sous charge statique, à partir de la position surbaissée. Lorsque le piston séparateur 41 atteint sa position haute dans l'accumulateur 40, l'électro-vanne 44 est commuté en position de repos et fermée, et le distributeur 48 passe en position d'isolement, de sorte qu'il maintient la pression dans la chambre de rappel 43, ce qui constitue un verrouillage hydraulique de sécurité contre une panne éventuelle de l'électro-vanne 44.

L'amortisseur se retrouve dans sa configuration de fonctionnement normal, avec tous les éléments au repos.

Le mode d'action de ce dispositif consiste donc à évacuer l'azote de la chambre basse pression de l'amortisseur vers un accumulateur externe à ce dernier, puis à assurer un verrouillage sur l'azote ainsi transféré, afin simultanément d'augmenter la dureté de l'amortisseur et d'abaisser sensiblement le centre de gravité de l'hélicoptère.

De plus, grâce au montage en dérivation des tuyauteries 47 et 47' raccordant le distributeur 48 au deux accumulateurs montés chacun sur l'amortisseur de chacun des deux atterrisseurs principaux, cette réalisation présente l'avantage de procurer un asservissement automatique de l'assiette de l'hélicoptère, au prix d'un encombrement des tuyauteries 47 et 47' qui est réduit.

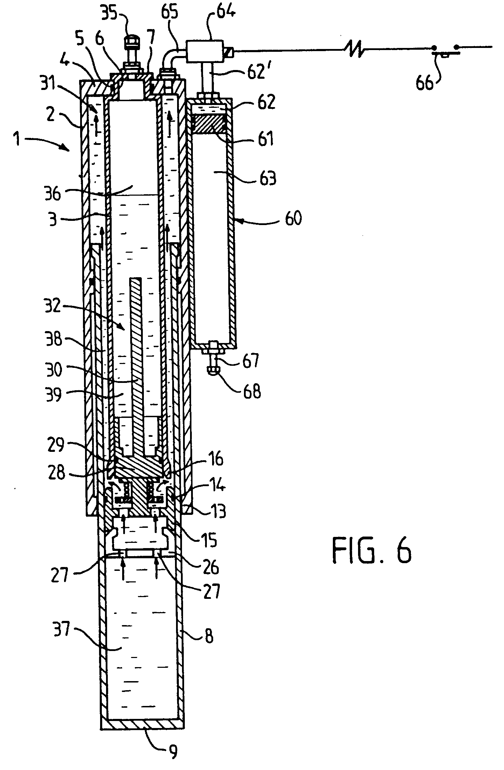

Sur la figure 6, on a représenté un second exemple de dispositif de réduction de l'élasticité d'amortissement installé sur l'amortisseur des figures 1 à 4, dont la structure est conservée, mais dont les conditions de remplissage sont légèrement modifiées.

En effet, on retrouve un accumulateur externe 60, fixé contre l'extérieur de la partie supérieure du corps d'amortisseur 1, et dans lequel un piston séparateur 61, monté axialement coulissant avec étanchéité, isole l'une de l'autre une chambre de transfert 62 et une chambre de rappel 63, sous le piston séparateur 61, et dans laquelle on a transféré la chambre de gaz à basse pression de l'amortisseur. Ce volume de gaz à basse pression est gonflé dans la chambre de rappel 63 par une valve de gonflage 67, montée sur l'extrémité inférieure de l'accumulateur 60, et munie d'une sonde de pression 68. Du fait de cette disposition de la chambre de gaz à basse pression 63 dans la chambre inférieure de l'accumulateur 60, le piston 61 est repoussé vers le haut, de façon à réduire le volume de la chambre de transfert 62, en communication avec la chambre annulaire 31 de l'amortisseur par le conduit de transfert 62', une électro-vanne 64 bi-stable, à deux positions et deux voies, et un raccord coudé 65 débouchant dans la chambre annulaire 31. Au repos, l'électro-vanne 64 et ouverte, et le remplissage de l'amortisseur en fluide hydraulique est tel que le volume de fluide hydraulique 38 de la chambre de détente à basse pression occupe toute la chambre annulaire 31, ainsi qu'un volume résiduel dans la chambre de transfert 62 par l'intermédiaire du raccord coudé 65, de l'électro-vanne 64 et du conduit de transfert 62'.

Comme dans l'exemple précédent, le contacteur 66 à bouton-poussoir de commande du circuit électrique de l'électro-vanne 64 est monté dans le poste de pilotage de l'hélicoptère.

Le fonctionnement de l'amortisseur équipé de ce second exemple de dispositif est le suivant. L'hélicoptère étant en vol, les atterrisseurs sortis ou fixés en position d'atterrissage avec leurs amortisseurs détendus, l'électro-vanne 64 est au repos ouverte, et le fluide hydraulique du volume 38 est adjacent à l'azote à basse pression dans la chambre 63 par l'intermédiaire du piston séparateur 61. Lorsque l'hélicoptère se pose, le fluide hydraulique est chassé de la chambre de compression 37 vers le volume 38, de sorte que le fluide hydraulique de ce volume 38 passe de la chambre annulaire 31 de l'amortisseur dans la chambre de transfert 62 de l'accumulateur 60 et comprime ainsi l'azote dans la chambre 63 en repoussant le piston séparateur 61 vers le bas dans l'accumulateur 60. Si l'appontage est doux, la chambre de gaz à haute pression 36 n'intervient pas, et si la section de l'accumulateur 60 est la même que celle de la chambre annulaire 31, les caractéristiques d'amortissement sont inchangées.

Lorsque l'amortisseur est en position statique, avec un certain enfoncement de la tige 8 dans le corps 1, et un déplacement correspondant du piston séparateur 61 vers le bas, dans l'accumulateur 60, une action sur le contacteur à bouton-poussoir 66 commande par impulsion la commutation de l'électro-vanne 64 de sa position stable ouverte à sa position stable fermée. L'amortisseur est ainsi isolé de sa chambre de gaz à basse pression 63, par un blocage sur le fluide hydraulique dans l'électro-vanne 64. Mais les caractéristiques d'élasticité de la chambre de gaz à haute pression 36 sont inchangées. Il y a donc suppression de l'élasticité uniquement de la chambre de gaz à basse pression. Tous les éléments du dispositif étant au repos, l'hélicoptère peut être entreposé sans surveillance particulière dans cette position.

Pour amener l'amortisseur en configuration normale, une nouvelle impulsion électrique de commande de l'électro-vanne 64 par manoeuvre du contacteur 66 commande la commutation de l'électro-vanne 64 de sa position de fermeture à sa position d'ouverture, ce qui rétablit la communication entre la chambre de gaz à basse pression 63 dans l'accumulateur 60 et le volume adjacent de fluide hydraulique 38 dans la chambre de détente à basse pression 31 de l'amortisseur.

On constate que le second exemple de la figure 6, avec blocage sur le fluide hydraulique, est technologiquement plus simple que le premier exemple, avec blocage sur le gaz, car il n'implique pas l'intervention d'un circuit hydraulique de l'hélicoptère. De plus, il est plus facile de réaliser une étanchéité au blocage de l'électro-vanne 64 sur le fluide hydraulique qu'une étanchéité au blocage de l'électro-vanne 44 sur un gaz tel que l'azote.

Cependant, ce second exemple, qui consiste à reporter la chambre de gaz à basse pression de l'amortisseur dans un accumulateur extérieur, puis à isoler par une électro-vanne la communication hydraulique entre l'amortisseur et cet accumulateur, ne permet pas d'assurer un raccourcissement de l'amortisseur à partir de sa position sous charge statique et donc ne permet pas de surbaisser l'hélicoptère.

En conséquence, ce second exemple de dispositif est avantageusement utilisé sur des amortisseurs-vérins, par exemple du type de ceux décrits dans les brevets français précités.

Dans une variante du second exemple de la figure 6, l'accumulateur 60 n'est pas fixé directement sur le corps 1 de l'amortisseur, mais monté sur la structure de l'hélicoptère, et sa chambre de transfert 62 et raccordée à l'électro-vanne 64 par une tuyauterie souple.

Mais, dans ces différentes réalisations, il est toujours possible d'annuler complètement l'élasticité de la chambre de gaz à basse pression, de sorte que l'amortisseur est raidi au point qu'il devient ainsi pratiquement aussi dur que s'il se trouvait en butée mécanique.

L'intégration d'un amortisseur selon l'une des figures 5 et 6 dans un atterrisseur principal d'hélicoptère peut être assurée pratiquement sans modification substantielle de l'atterrisseur lui-même.

Selon un exemple de réalisation d'atterrisseur convenant avantageusement aux hélicoptères embarqués, et en se référant à nouveau à la figure 1, l'atterrisseur peut être du type dit "à coulissement direct", et comporter une jambe d'atterrisseur dont le caisson est directement constitué par le cylindre externe 2 du corps d'amortisseur 1, tandis que l'extrémité inférieure de la tige 8 est prolongée, comme représenté en traits mixtes, par une chape 70 supportant un axe 71 sur lequel est montée une roue 72 de contact avec le sol. De manière classique la rotation de la tige 8 par rapport au corps 1, et autour de leur axe commun, peut être empêchée par un compas, repéré schématiquement par les axes 75 de ses deux branches articulées l'une sur l'autre et dont la branche inférieure est articulée sur une attache 73 en saillie vers l'extérieur sur l'extrémité inférieure de la tige 8, tandis que la branche supérieure est également articulée sur une attache analogue 74 en saillie vers l'extérieur et du même côté sur l'extrémité inférieure du cylindre externe 2.

Cet atterrisseur peut être non relevable et fixé en position d'appontage par son corps 1 sur la structure de l'hélicoptère, ou relevable en vol, auquel cas une chape 76 de pivotement sur un arbre solidaire de la structure de l'hélicoptère est par exemple prévue sur l'extrémité supérieure du cylindre externe 2, et une attache 77 est également prévue sur ce dernier, par exemple à mi-hauteur, pour la liaison au corps 1 d'une extrémité d'un vérin hydraulique de manoeuvre et, éventuellement, de contre-ventement, dont l'autre extrémité est liée à la structure de l'hélicoptère, afin de commander les pivotements de relevage ou de descente de l'atterrisseur.

Il est également possible que l'atterriseur soit du type dit "à balancier", dont le balancier est constitué directement par le caisson de jambe, qui est incliné et articulé par son extrémité supérieure sur la structure de l'hélicoptère. La roue est alors montée sur l'extrémité inférieure du balancier, sur la partie centrale duquel est articulée l'extrémité inférieure de la tige 8, alors que l'extrémité supérieure du corps 1 est articulée sur l'hélicoptère. Si l'atterrisseur est relevable, les manoeuvres de relevage et de descente peuvent être assurées par un vérin articulé d'une part sur l'hélicoptère et d'autre part sur le balancier, ou encore intégré dans l'amortisseur sous la forme d'un amortisseur-vérin.

L'atterrisseur peut enfin être d'un autre type dit "à balancier", dans lequel un balancier incliné est articulé par son extrémité supérieure sur l'extrémité inférieure d'un caisson de jambe d'atterrisseur, lui-même lié par son extrémité supérieure à la structure de l'hélicoptère. La roue est portée par l'extrémité inférieure du balancier, et l'amortisseur est articulé, par l'extrémité inférieure de sa tige 8, sur le balancier, et par l'extrémité supérieure de son corps 1 sur le caisson de jambe. Dans ce cas également, si l'atterrisseur est relevable, un vérin de manoeuvre distinct de l'amortisseur ou intégré à ce dernier peut être prévu.

Dans le cas où l'atterrisseur est équipé d'un amortisseur avec dispositif de réduction de sa souplesse selon la figure 6, et si le volume de l'accumulateur 60 fixé sur le corps 1 constitue une gêne pour le relevage de l'atterrisseur, il est intéressant que le dispositif de réduction de souplesse soit un dispositif amovible et optionnel, qui est alors monté sur les amortisseurs avec interdiction de rentrer les atterrisseurs. En effet, les missions effectuées par les hélicoptères embarqués à partir de navires se font très souvent avec les trains d'atterrissage sortis, et c'est dans ce cadre d'utilisation que cette interdiction est la moins pénalisante. Il suffit de démonter le dispositif optionnel pour retrouver une configuration d'atterrisseur relevable, sous réserve de reconditionner l'amortisseur en regonflant sa chambre de gaz à basse pression 34 dans sa chambre annulaire 31.

Pour les deux exemples de réalisation, appliqués à un hélicoptère de moyen tonnage de masse à vide de l'ordre de deux tonnes pour un supplément de masse estimé à 5 kg par atterriseur, on obtient un gain de stabilité qui est, sur sol stable, de 4,5 m/s environ, soit une tenue à un vent latéral d'environ 28 m/s, et, en dynamique, de l'ordre de 6,5 m/s, soit une tenue à un vent latéral de l'ordre de 18 m/s.

## Revendications

1. Amortisseur oléopneumatique de suspension pour atterrisseur d'aérodyne, en particulier d'hélicoptère embarqué, du type comprenant un corps d'amortisseur (1), au moins un piston d'amortisseur (10), au moins une tige d'amortisseur (8) et un piston séparateur (28) monté coulissant avec étanchéité à l'intérieur du corps (1), la tige d'amortisseur (8) étant montée coulissante avec étanchéité dans le corps (1), et qui définissent dans l'amortisseur une chambre de compression (37) contenant un fluide hydraulique sensiblement incompressible, et une chambre de détente (31) contenant un volume de fluide hydraulique (38) adjacent à un volume (34) d'un fluide compressible sous pression, et en communication avec la chambre de compression (37) par l'intermédiaire de moyens de laminage (23, 24, 27) qui délimitent au moins un passage en compression (20, 22, 27) du fluide hydraulique chassé de ladite chambre de compression (37) vers ledit volume adjacent de fluide hydraulique (38) de ladite chambre de détente (31), lorsque l'amortisseur est sollicité en compression, et au moins un passage de laminage en détente (20, 22, 24, 27) du fluide hydraulique chassé dudit volume adjacent (38) de ladite chambre de détente (31) vers ladite chambre de compression (37) lorsque l'amortisseur est sollicité en détente, comprenant un dispositif de réduction de la souplesse, ledit dispositif comprenant:
- au moins un accumulateur (40, 60) étanche et extérieur à l'amortisseur,
- au moins un piston séparateur (41, 61) monté coulissant avec étanchéité dans ledit accumulateur (40, 60) de manière à délimiter dans ce dernier deux chambres à volume variable en opposition, isolées l'une de l'autre, et dont l'une est une chambre de transfert (42, 62) et l'autre une chambre de rappel (43, 63),
- au moins un conduit de transfert (42', 62') raccordant ladite chambre de transfert (42, 62) de l'accumulateur à au moins une chambre de détente (31) de l'amortisseur, et
- des moyens commandés (44, 64) d'obturation sélective dudit conduit (42', 62') manoeuvrable entre deux positions, dont l'une est une position d'ouverture du conduit (42', 62') permettant le transfert au moins partiel d'au moins un fluide (34, 38) de ladite chambre de détente (31) de l'amortisseur chargé en compression dans ladite chambre de transfert (42, 62) de l'accumulateur, ou le retour dudit fluide de ladite chambre de transfert (42, 62) de l'accumulateur dans ladite chambre de détente (31) de l'amortisseur, sollicité en détente, et dont l'autre est une position de fermeture isolant ladite chambre de détente (31) de l'amortisseur dudit accumulateur (40, 60) dans lequel est retenu au moins partiellement ledit volume de fluide compressible (34, 63), caractérisé en ce que le corps d'amortisseur (1) est constitué de deux tubes cylindriques (2, 3) de sections différentes et disposés sensiblement coaxialement l'un dans l'autre, la tige d'amortisseur (8) est tubulaire cylindrique et engagée entre les deux tubes (2, 3) du corps (1), et le piston séparateur (28) est monté coulissant avec étanchéité à l'intérieur du tube intérieur (3) du corps (1), ladite tige d'amortisseur (8), lesdits tubes (2, 3) et le piston séparateur (28) d'amortisseur définissant dans l'amortisseur au moins deux chambres de détente (31, 32) contenant chacune un volume de fluide hydraulique (38, 39), l'amortisseur comportant au moins un deuxième volume de fluide compressible (34, 63) destiné à agir sur le fluide hydraulique (38) contenu dans celle (31) des chambres de détente (31, 32) à laquelle la chambre de transfert (42, 62) de l'accumulateur (40, 60) est reliée et initialement pressurisée à une pression inférieure à celle (ou celles) du volume (36) (ou des volumes) d'un fluide compressible adjacent(s) au(x) volume(s) de fluide hydraulique (39) contenu(s) dans la (32) (ou les) autre(s) chambre(s) de détente.

2. Amortisseur selon la revendication 1 dont au moins une des chambres de détente (31) est formée de sorte que le volume de fluide compressible formé par une chambre de gaz pressurisé (34) et le volume adjacent de fluide hydraulique (38) sont logés dans ledit corps (1) et/ou ladite tige d'amortisseur (8), caractérisé en ce que ledit conduit de transfert (42') raccorde ladite chambre de transfert (42) de l'accumulateur (40) dont le volume de fluide compressible est pressurisé à la pression plus faible, de telle sorte que du gaz pressurisé est transféré de ladite chambre de détente (31) à ladite chambre de transfert (42) et remplit cette dernière lorsque l'amortisseur est sollicité en compression et après ouverture des moyens commandés d'obturation sélective (44), qui sont fermés au repos pour le fonctionnement normal de l'amortisseur et après remplissage de ladite chambre de transfert (42) en gaz pressurisé pour durcir l'amortisseur, et en ce que ladite chambre de rappel (43) de l'accumulateur (40) est raccordé à un distributeur (48) d'un circuit de manoeuvre comprenant une conduite d'alimentation (49) en fluide de manoeuvre pressurisé et une conduite de retour (50) du fluide de manoeuvre vers un réservoir, ledit distributeur (48) étant un distributeur commandé à au moins trois voies et à au moins deux positions dont l'une est une position de vidange, raccordant ladite chambre de rappel (43) à ladite conduite de retour (50), et autorisant la vidange de ladite chambre de rappel (43) en fluide de manoeuvre pour permettre le remplissage de ladite chambre de transfert (42) en gaz comprimé après l'ouverture des moyens commandés (44) d'obturation sélective, et dont l'autre est une position de remplissage de ladite chambre de rappel (43), raccordant cette dernière à ladite conduite d'alimentation (49) en fluide de manoeuvre pressurisé et permettant le remplissage de la chambre de rappel (43) en fluide de manoeuvre pressurisé pour assurer la vidange de ladite chambre de transfert (42) et le retour du gaz pressurisé dans la chambre de détente (31) de l'amortisseur, après ouverture desdits moyens commandés d'obturation sélective (44).

3. Amortisseur selon la revendication 2, caractérisé en ce que ledit distributeur commandé (48) est un distributeur à trois positions, dont la troisième position est une position d'isolement de ladite chambre de rappel (43) vis-à-vis des conduites d'alimentation et de retour en fluide de manoeuvre (49, 50), ladite position d'isolement assurant un verrouillage de sécurité de ladite chambre de rappel (43), au moins lorsque cette dernière est remplie.

4. Amortisseur selon l'une des revendications 2 et 3, caractérisé en ce que ledit circuit de fluide de manoeuvre (48, 49, 50) est un circuit hydraulique de l'aérodyne.

5. Amortisseur selon l'une des revendications 2 à 4, caractérisé en ce que les moyens commandés d'obturation sélective comprennent au moins une électro-vanne de transfert (44) et son circuit électrique de commande (46) et ledit distributeur (48) est un électro-distributeur dont le circuit électrique de commande est couplé au circuit électrique de commande de l'électro-vanne (44), de sorte que les commandes de l'électro-vanne (44) et de l'électro-distributeur (48) soient synchronisées par la manoeuvre d'un unique commutateur (46), commandant simultanément l'ouverture de l'électro-vanne (44) à partir de sa position de repos fermée, et le passage de l'électro-distributeur (48) en position de vidange de ladite chambre de rappel (43).

6. Amortisseur selon la revendication 5, caractérisé en ce que l'unique commutateur (46) commande également simultanément l'ouverture de l'électro-vanne (44) à partir de sa position d'isolement de la chambre de transfert (42) remplie de gaz, et le passage de l'électro-distributeur (48) en position de remplissage de ladite chambre de rappel (43).

7. Amortisseur selon l'une des revendications 2 à 6, caractérisé en ce qu'il comprend également un contacteur de fin de course (51), sensible aux déplacements relatifs du corps d'amortisseur (1) et de la tige d'amortisseur (8) et destiné à délivrer des impulsions électriques de commande de fermeture aux moyens commandés d'obturation sélective (44) lorsqu'il détecte une position d'enfoncement maximum autorisée de la tige d'amortisseur (8) dans le corps (1), à partir d'une position sous charge statique de l'amortisseur, et en raison d'un transfert de gaz de l'amortisseur vers la chambre de transfert (42) de l'accumulateur (40).

8. Amortisseur selon la revendication 7, caractérisé en ce que ledit contacteur de fin de course (51) commande simultanément le passage du distributeur (48) en position d'isolement de ladite chambre de rappel (43).

9. Amortisseur selon l'une des revendications 2 à 8, caractérisé en ce que le volume interne de l'accumulateur (40) est suffisant pour que ladite chambre de transfert (42) contienne tout le gaz de la chambre de détente (31) de l'amortisseur, en position de vidange de la chambre de rappel (43).

10. Amortisseur selon l'une des revendications 2 à 9, caractérisé en ce que le conduit de transfert (42') comprend un raccord en T (45), fixé sur l'amortisseur et raccordant ladite chambre de détente (31) de l'amortisseur en parallèle auxdits moyens commandés d'obturation sélective (44) et à une valve de gonflage (33) en gaz sous pression, lesdits moyens et ladite valve étant directement fixés au raccord en T (45).

11. Amortisseur selon l'une des revendications 2 à 10, caractérisé en ce que ledit accumulateur (40) est destiné à être fixé sur l'amortisseur (1, 8) tandis que le distributeur (48) et les conduites d'alimentation et de retour (49, 50) dudit circuit de manoeuvre sont destinés à être montés sur l'aérodyne, le distributeur (48) étant raccordé à l'accumulateur (40) par une canalisation souple (47).

12. Amortisseur selon la revendication 1, caractérisé en ce que le deuxième volume de fluide compressible de ladite chambre de détente (31) raccordée à l'accumulateur (60) est un volume de gaz sous pression logé dans ladite chambre de rappel (63) de l'accumulateur (60), et séparé par le piston (61) de ce dernier du fluide hydraulique (38) contenu dans ladite chambre de détente (31), le fluide hydraulique étant transféré de l'amortisseur dans la chambre de transfert (62) en comprimant la chambre de rappel (63) lorsque l'amortisseur est sollicité en compression, la fermeture des moyens commandés d'obturation sélective (64), qui sont ouverts au repos, durcissant l'amortisseur.

13. Amortisseur selon la revendication 12, caractérisé en ce qu'une valve de gonflage en gaz sous pression (67) et une sonde de pression (68) sont montées sur l'accumulateur (60) et débouchent dans une partie d'extrémité de la chambre de rappel (63), du côté opposé au piston séparateur (61).

14. Amortisseur selon l'une des revendications 12 et 13, caractérisé en ce que les moyens d'obturation sélective comprennent une électro-vanne bi-stable (64), commutée de sa position d'ouverture à sa position de fermeture par des impulsions de commande délivrées par un contacteur de commande à bouton-poussoir (66) de son circuit électrique de commande.

15. Amortisseur selon la revendication 14, caractérisé en ce que l'accumulateur (60) est destiné à être fixé à l'amortisseur (1, 8) tandis que le contacteur (66) du circuit électrique de commande de l'électro-vanne (64) est destiné à être monté sur l'aérodyne.

16. Amortisseur selon la revendication 14, caractérisé en ce que l'accumulateur et le contacteur (66) du circuit électrique de commande de l'électro-vanne (64) sont destinés à être montés sur l'aérodyne, ledit accumulateur étant raccordé à l'amortisseur (1, 8) par une conduite souple.

17. Amortisseur selon l'une des revendications 1 à 16, caractérisé en ce que le cylindre externe (2) et le cylindre interne (3) logé sensiblement coaxialement dans le cylindre externe (2) du corps (1) sont fermés par un fond (4, 7) à leurs extrémités situées d'un même côté axial, et ouverts à leurs extrémités opposées (13, 16), en ce que l'amortisseur comprend une unique tige d'amortisseur (8) creuse, ouverte à une extrémité (10) qui est engagée entre les deux cylindres (2, 3) et à fond fermé (9) à son extrémité opposée, ladite tige (8) étant montée axialement coulissante avec étanchéité (12, 14) entre les deux cylindres (2, 3), en ce que les moyens de laminage (27, 23, 24) sont disposés sensiblement au niveau de l'extrémité ouverte (16) du cylindre interne (3), et en ce que, au repos, du fluide hydraulique remplit une chambre de compression (37) délimitée dans la tige (8) entre son fond (9) et lesdits moyens de laminage, et est en communication, au-travers desdits moyens de laminage, avec d'une part, une première chambre de détente (31), de forme annulaire et délimitée par la tige (8) entre les deux cylindres (2, 3), et contenant un volume de fluide hydraulique (38) adjacent aux moyens de laminage ainsi qu'à une chambre de gaz à basse pression (34, 63), et d'autre part, une seconde chambre de détente (32), délimitée dans le cylindre interne (3) et contenant une chambre de gaz à haute pression (36) ainsi qu'un volume adjacent de fluide hydraulique (39), qui est isolé du fluide hydraulique des deux autres chambres (37, 31) par un piston séparateur (28) monté coulissant avec étanchéité dans le cylindre interne (3), le conduit (42', 62') de transfert à l'accumulateur (40, 60) débouchant par un raccord (45, 65) dans la partie d'extrémité de la chambre de détente annulaire (31) qui est voisine du fond (4, 7) des cylindres (2, 3).

18. Amortisseur selon la revendication 17, caractérisé en ce que, au repos la chambre de gaz à basse pression (34) est également dans la chambre de détente annulaire (31).

19. Amortisseur selon la revendication 17, caractérisé en ce que la chambre de gaz à basse pression (63) est logée dans la chambre de rappel de l'accumulateur (60) et est isolée du fluide hydraulique adjacent (38) dans la chambre de détente annulaire (31) et dans la chambre de transfert (62) de l'accumulateur (60) par le piston séparateur (61) monté dans ce dernier.

20. Atterrisseur pour aérodyne, comprenant un caisson de jambe lié à la structure de l'aérodyne, au moins un organe de contact avec le sol, tel qu'une roue (72) et au moins un amortisseur (1, 8) relié au caisson de jambe et à l'organe de contact avec le sol (72) de façon à amortir les mouvements relatifs entre le caisson de jambe et ledit organe, caractérisé en ce qu'au moins un amortisseur est un amortisseur (1, 8) selon l'une des revendications 1 à 19.

21. Atterrisseur selon la revendication 20, caractérisé en ce qu'il est à coulissement direct, le corps d'amortisseur (1) constituant simultanément le caisson de jambe, et l'organe de contact avec le sol (72) étant porté par l'extrémité de la tige d'amortisseur (8) qui est externe audit corps (1).

22. Atterrisseur selon la revendication 20, caractérisé en ce qu'il est du type à balancier, dans lequel l'organe de contact avec le sol est porté par l'extrémité inférieure du caisson de jambe incliné et articulé par son extrémité supérieure sur la structure de l'aérodyne, l'amortisseur étant articulé par son corps (1) sur ladite structure de l'aérodyne et par l'extrémité de sa tige (8) externe audit corps (1) sur le caisson de jambe.

23. Atterrisseur selon la revendication 20, caractérisé en ce qu'il est du type à balancier dans lequel l'organe de contact avec le sol est porté par l'extrémité inférieure d'un balancier incliné articulé par son extrémité supérieure sur l'extrémité inférieure du caisson de jambe relié par son extrémité supérieure à la structure de l'aérodyne, l'amortisseur étant articulé par son corps (1) sur le caisson de jambe et par l'extrémité de sa tige (8) externe audit corps sur le balancier.

## Claims

1. An oleo-pneumatic suspension shock absorber for aircraft undercarriages, in particular for ship-borne helicopters, of the type comprising a shock absorber body (1), at least one shock absorber piston (10), at least one shock absorber rod (8) and a separating piston (28) mounted in a sliding and sealed manner inside the body (1), the shock absorber rod (8) being mounted in a sliding and sealed manner in the body (1), and which define in the shock absorber at least one compression chamber (37), containing a substantially incompressible hydraulic fluid, and at least one expansion chamber (31) containing at least one volume of hydraulic fluid (38) adjacent to at least one volume (34) of a fluid which is compressible under pressure, and in communication with the compression chamber (37) by the intermediary of throttling means (23, 24, 27), which delimit at least one throttling passage under compression (20, 22, 27) of the hydraulic fluid expelled from the said compression chamber (37) into the said adjacent volume of hydraulic fluid (38) of the said expansion chamber (31), when the shock absorber is caused to compress, and at least one throttling passage under expansion (20, 22, 24, 27) of the hydraulic fluid expelled from the said adjacent volume (38) of the said expansion chamber (31) into the said compression chamber (37), when the shock absorber is caused to expand, comprising a device for reducing the flexibility, the said device comprising :
- at least one sealed accumulator (40, 60) which is external to the shock absorber,
- at least one separating piston (41, 61) mounted in a sliding and sealed manner in the said accumulator (40, 60), in such a way as to delimit in the latter two chambers of oppositely variable volume, isolated from each other, one of which is a transfer chamber (42, 62) and the other of which is a return chamber (43, 63),
- at least one transfer duct (42', 62'), connecting the said transfer chamber (42, 62) of the accumulator to at least one expansion chamber (31) of the shock absorber, and
- controlled means (44, 64) of selectively blocking the said duct (42', 62'), these means being maneuverable between two positions, one of which is a duct (42', 62') open position, allowing the transfer of at least a part of at least one fluid (34, 38) from the said expansion chamber (31) of the shock absorber, when the latter is loaded in compression, into the said transfer chamber (42, 62) of the accumulator, or the return of the said fluid from the said transfer chamber (42, 62) of the accumulator into the said expansion chamber (31) of the shock absorber, when the latter is caused to expand, and the other of which is a closed position isolating the said expansion chamber (31) of the shock absorber from the said accumulator (40, 60) in which the said volume of compressible fluid (34, 63) is at least partially retained, characterized in that the shock absorber body (1) comprises two cylindrical tubes (2, 3) of different cross-sections and substantially coaxially mounted one inside the other, in that the shock absorber rod (8) is cylindrical and tubular and mounted between the two tubes (2, 3) of the said body (1), and in that the separating piston (28) is mounted in a sliding and sealed manner inside the internal tube (3) of the said body (1), the shock absorber rod (8), the tubes (2, 3), and the separating piston (28) of the shock absorber defining in the said shock absorber at least two expansion chambers (31, 32), each one of which contains a volume of hydraulic fluid (38, 39), and the said shock absorber comprising at least a second volume of compressible fluid (34, 63) intended to act upon the hydraulic fluid (38) contained in that one (31) of the expansion chambers (31, 32) to which the transfer chamber (42, 62) of the accumulator (40, 60) is connected and which is initially pressurized at a pressure lower than that (or those) of the volume(s) (36) of a compressible fluid adjacent to the volume(s) of hydraulic fluid (39) contained in the other expansion chamber(s) (32.)

2. The shock absorber as claimed in claim 1 with at least one expansion chamber (31) being formed such that a compressible fluid volume, formed by a chamber of pressurized gas (34) and an adjacent volume of hydraulic fluid (38) are housed in the said body (1) and/or the said shock absorber rod (8), characterized in that the said transfer duct (42') connects the said transfer chamber (42) of the accumulator (40) the volume of compressible fluid of which is pressurized at the lower pressure, such that the pressurized gas is transferred form the said expansion chamber (31) to the said transfer chamber (42) and fills the latter when the shock absorber is caused to compress and after opening the controlled means of selective blocking (44), which are closed in the rest state, for the normal functioning of the shock absorber, and after filling the said transfer chamber (42) with pressurized gaz in order to harden the shock absorber, and in that the said return chamber (43) of the accumulator (40) is connected to an operating fluid circuit distributor (48) comprising a duct (49) for the supply of pressurized operating fluid and a duct (50) for the return of the operating fluid to a reservoir, the said distributor (48) being a controlled distributor having at least three ways and at least two positions, one of which is a draining position, connecting the said return chamber (43) to the return duct (50), and allowing the draining of the said return chamber (43) of operating fluid in order to allow the filling of the said transfer chamber (42) with compressed gas after the opening of the controlled means (44) of selective blocking, and of which the other is a position of filling the said return chamber (43), connecting the latter to the said pressurized operating fluid supply duct (49), and allowing the filling of the return chamber (43) with pressurized operating fluid in order to provide the draining of the said transfer chamber (42), and the return of the pressurized gas into the expansion chamber (31) of the shock absorber, after opening the said controlled means of selective blocking (44).

3. The shock absorber as claimed in claim 2, characterized in that the said controlled distributor (48) is a threeposition distributor, whose third position is a position of isolation of the said return chamber (43) with respect to the operating fluid supply and return ducts (49, 50), the said isolation position providing a safety locking of the said return chamber (43), at least when the latter is filled.

4. The shock absorber as claimed in one of claims 2 and 3, characterized in that the said operating fluid circuit (48, 49, 50) is a hydraulic circuit of the aircraft.

5. The shock absorber as claimed in one of claims 2 to 4, characterized in that the controlled means of selective blocking comprise at least one transfer electro-valve (44) and its electrical control circuit (46) and the said distributor (48) is an electro-distributor whose electrical control circuit is coupled to the electrical control circuit of the electro-valve (44), in such a way that the controls of the electro-valve (44) and of the electro-distributor (48) are synchronized by the operation of a single switch (46), simultaneously controlling the opening of the electro-valve (44) from its closed rest position, and the passage of the electro-distributor (48) into the position of draining the said return chamber (43).

6. The shock absorber as claimed in claim 5, characterized in that the single switch (46) also simultaneously controls the opening of the electro-valve (44) from its closed position of isolation of the transfer chamber (42) filled with gas, and the passage of the electro-distributor (48) into the position of filling the said return chamber (43).

7. The shock absorber as claimed in one of claims 2 to 6, characterized in that it also comprises an end of travel contactor (51), sensitive to the relative displacements of the shock absorber body (1) and of the shock absorber rod (8), and controlling the closing of the said controlled means of selective blocking (44) when it detects a position of maximum allowed penetration of the shock absorber rod (8) in the body (1), starting from a position under static load of the shock absorber, and due to a transfer of gas from the shock absorber into the transfer chamber (42) of the accumulator (40).

8. The shock absorber as claimed in claim 7, characterized in that the said end of travel contactor (51) simultaneously controls the passage of the distributor (48) into the position of isolation of the said return chamber (43).

9. The shock absorber as claimed in one of claims 2 to 8, characterized in that the internal volume of the accumulator (40) is sufficient for the said transfer chamber (42) to contain all of the gas of the expansion chamber (31) of the shock absorber, in the position of draining of the return chamber (43).

10. The shock absorber as claimed in one of claims 2 to 9, characterized in that the transfer duct (42') comprises a T connector (45), fixed to the shock absorber, and connecting the said expansion chamber (31) of the shock absorber in parallel to the said controlled means of selective blocking (44) and to a valve (33) for inflation with pressurized gas, the said means and the said valve being directly fixed to the T connector (45).

11. The shock absorber as claimed in one of claims 2 to 10, characterized in that the said accumulator (40) is intended to be fixed on the shock absorber (1, 8) while the said distributor (48) and the supply and return ducts (49, 50) of the said operating circuit are intended to be mounted on the aircraft, the distributor (48) being connected to the accumulator (40) by a flexible pipe (47).

12. The shock absorber as claimed in claim 1, characterized in that the second volume of compressible fluid of the said expansion chamber (31) connected to the accumulator (60) is a volume of pressurized gas housed in the said return chamber (63) of the accumulator (60), and separated by the separating piston (61) of the latter from the hydraulic fluid (38) contained in the said expansion chamber (31), the hydraulic fluid being transferred from the shock absorber into the transfer chamber (62) by compressing the return chamber (63) when the shock absorber is caused to compress, the closing of the controlled means of selective blocking (64), which are open in the rest condition, hardening the shock absorber.

13. The shock absorber as claimed in claim 12, characterized in that a valve for inflation with pressurized gas (67) and a pressure probe (68) are mounted on the accumulator (60) and open into an end section of the return chamber (63), on the side opposite to the separating piston (61).

14. The shock absorber as claimed in one of claims 12 and 13, characterized in that the controlled means of selective blocking comprise a bistable electro-valve (64), switched from its open position to its closed position by control pulses supplied by a push-button control contactor (66) of its electrical control circuit.

15. The shock absorber as claimed in claim 14, characterized in that the accumulator (60) is intended to be fixed to the shock absorber (1, 8) while the contactor (66) of the electrical control circuit of the electro-valve (64) is intended to be fitted to the aircraft.

16. The shock absorber as claimed in claim 14, characterized in that the accumulator and the contactor (66) of the electrical control circuit of the electro-valve (64) are intended to be mounted on the aircraft, the said accumulator being connected to the shock absorber (1, 8) by a flexible duct.

17. The shock absorber as claimed in one of claims 1 to 16, characterized in that the external cylinder (2) and the internal cylinder (3) housed substantially coaxially inside the external cylinder (2), are closed by a base (4, 7) at their ends located on the same axial side, and open at their opposite ends (13, 16), in that it comprises a single hollow shock absorber rod (8), open at an end (10) which is engaged between the two cylinders (2, 3), and having a closed base (9) at its opposite end, the said rod (8) being axially mounted in a sliding and sealed manner (12, 14) between the two cylinders (2, 3), in that the throttling means (27, 23, 24) are substantially disposed at the level of the open end (16) of the internal cylinder (3) and in that, in the rest condition, hydraulic fluid fills a compression chamber (37), delimited inside the rod (8) between its base (9) and the said throttling means, and is in communication through the said throttling means with, on the one hand, a first expansion chamber (31), of annular shape and delimited by the rod (8) between the two cylinders (2, 3), and containing a volume of hydraulic fluid (38) adjacent to the throttling means and to a low pressure gas chamber (34, 63) and, on the other hand, a second expansion chamber (32), delimited in the internal cylinder (3) and containing a high pressure gas chamber (36) and an adjacent volume of hydraulic fluid (39), which is isolated from the hydraulic fluid of the other two chambers (37, 31) by a separating piston (28) mounted in a sliding and sealed manner in the internal cylinder (3), the transfer duct (42', 62') to the accumulator (40, 60) opening through a connector (45, 65) into the end section of the annular expansion chamber (31) which is adjacent to the base (4, 7) of the cylinders (2, 3).

18. The shock absorber as claimed in claim 17, characterized in that the rest state, the low pressure gas chamber (34) is also housed in the annular expansion chamber (31).

19. The shock absorber as claimed in claim 17, characterized in that the low pressure gas chamber (63) is housed in the return chamber of the accumulator (60) and is isolated from the adjacent hydraulic fluid (38) in the annular expansion chamber (31) and in the transfer chamber (62) of the accumulator (60) by the separating piston (61) mounted in the latter.

20. An aircraft undercarriage, comprising a leg box linked with the structure of the aircraft, at least one member for contact with the ground, such as a wheel (72), and at least one shock absorber (1, 8) connected to the leg box and to the member for contact with the ground (72) in such a way as to dampen the relative movements between the leg box and the said member, characterized in that at least one shock absorber is a shock absorber (1, 8) as claimed in one of the claims 1 to 19.

21. The undercarriage as claimed in claim 20, characterized in that it is a direct sliding undercarriage, the shock absorber body (1) simultaneously constituting the leg box, and the member for contact with the ground (72) being carried by the end of the shock absorber rod (8) which is external to the said body (1).

22. The undercarriage as claimed in claim 20, characterized in that it is of the balance arm type, in which the member for contact with the ground is carried by the lower end of the leg box inclined and articulated by its upper end on the structure of the aircraft, the shock absorber being articulated by its body (1) on the said structure of the aircraft and by the end of its rod (8) external to the said body (1) on the leg box.

23. The undercarriage as claimed in claim 20, characterized in that it is of the balance arm type in which the member for contact with the ground is carried by the lower end of an inclined balance arm articulated by its upper end on the lower end of the leg box connected by its upper end to the structure of the aircraft, the shock absorber being articulated by its body (1) on the leg box and by the end of its rod (8) external to the said body on the balance arm.

## Patentansprüche

1. Oleopneumatischer Aufhängungsdämpfer für ein Luftfahrzeuglandegestell, insbesondere für ein Landegestell eines Bordhubschraubers, mit einem Dämpferkörper (1), wenigstens einem Dämpferkolben (10), wenigstens einer Dämpferstange (8) und einem Trennkolben (28), die beide (8, 28) gleitend mit Abdichtung im Inneren des Körpers (1) gelagert sind, die im Dämpfer eine ein im wesentlichen inkompressibles Hydraulikfluid enthaltende Kompressionskammer (37) sowie eine Entspannungskammer (31) bestimmen, die ein Volumen eines Hydraulikfluids (38) enthält, das an ein Volumen (34) eines unter Druck kompressiblen Fluids angrenzt und mit der Kompressionskammer (37) über Glättungsmittel (23, 24, 27), die wenigstens einen Druckdurchgang (20, 22, 27) des, wenn der Dämpfer komprimiert wird, aus der Kompressionskammer (37) zum angrenzenden Volumen eines Hydraulikfluids (38) der Entspannungskammer (31) vertriebenen Hydraulikfluids begrenzen, und über wenigstens einen Glättungsdurchgang (20, 22, 24, 27) bei Entspannung des, wenn der Dämpfer entlastet wird, aus dem angrenzenden Volumen (38) der Entspannungskammer (31) zur Kompressionskammer (37) vertriebenen Fluids in Verbindung steht, mit einer Vorrichtung zum Reduzieren der Weichheit, wobei die Vorrichtung
- wenigstens einen dichten und außerhalb des Dämpfers befindlichen Sammler (40, 60),
- wenigstens einen Trennkolben (41, 61), der gleitend mit Abdichtung im Sammler (40, 60) so gelagert ist, daß er in letzterem zwei Kammern mit entgegengesetzt veränderbaren Volumina begrenzt, die von einander getrennt sind und von denen die eine eine Überleitungskammer (42, 62) und die andere eine Rückholkammer (43, 63) ist,
- wenigstens einen Überleitungskanal (42', 62'), der die Überleitungskammer (42, 62) des Sammlers mit wenigstens einer Entspannungskammer (31) des Dämpfers verbindet, und
- steuerbare Mittel (44, 64) zum wählbaren Schließen des Kanals (42', 62'), die zwischen zwei Positionen steuerbar sind, von denen die eine eine Offenstellung des Kanals (42', 62') zum wenigstens teilweisen Überleiten wenigstens eines Fluids (34, 38) aus der Entspannungskammer (31) des kompressionsbelasteten Dämpfers in die Überleitungskammer (42, 62) des Sammlers oder für den Rückfluß des Fluids aus der Überleitungskammer (42, 62) des Sammlers in die Entspannungskammer (31) des entlasteten Dämpfers ist und von denen die andere eine Geschlossenstellung ist, in der die Entspannungskammer (31) des Dämpfers vom Sammler (40, 60), in dem das Volumen (34, 63) kompressiblen Fluids wenigstens teilweise enthalten ist, getrennt ist, aufweist, dadurch gekennzeichnet, daß der Dämpferkörper (1) zwei zylindrische Rohre (2, 3) unterschiedlichen Querschnitts, die im wesentlichen koaxial ineinander gesetzt sind, aufweist, die Dämpferstange (8) zylindrisch rohrförmig ist und zwischen den beiden Rohren (2, 3) des Körpers (1) angeordnet ist und der Trennkolben (28) gleitend mit Abdichtung im Inneren des inneren Rohrs (3) gelagert ist, wobei die Dämpferstange (8), die beiden Rohre (2, 3) und der Trennkolben (28) des Dämpfers im Dämpfer wenigstens zwei Entspannungskammern (31, 32) begrenzen, von denen jede ein Volumen eines Hydraulikfluids (38, 39) enthält, und wobei der Dämpfer wenigstens ein zweites Volumen kompressiblen Fluids (34, 63) enthält, das dazu bestimmt ist, auf das in jener (31) der Entspannungskammern (31, 32) enthaltene Hydraulikfluid (38) zu wirken, mit der die Überleitungskammer (42, 62) des Sammlers (40, 60) verbunden ist und die anfangs mit einem niedrigeren Druck als jenem (oder jenen) des Volumens (36) (oder der Volumina) eines kompressiblen Fluids, das (oder die) an das (oder die) in der (oder den) anderen Kammer(n) (32) enthaltene(n) Volumen (Volumina) eines Hydraulikfluids (39) angrenzt, beaufschlagt ist.

2. Dämpfer nach Anspruch 1, bei dem wenigstens eine der Entspannungskammern (31) derart ausgebildet ist, daß das von einer Druckgaskammer (34) gebildete Volumen kompressiblen Fluids und das angrenzende Volumen eines Hydraulikfluids (38) im Dämpferkörper (1) und/oder in der Dämpferstange (8) angeordnet sind, dadurch gekennzeichnet, daß der Überleitungskanal (42') die Überleitungskammer (42) des Sammlers (40), dessen Volumen kompressiblen Fluids mit niedrigerem Druck beaufschlagt ist, derart verbindet, daß Druckgas von der Entspannungskammer (31) in die Überleitungskammer (42) geleitet wird und diese auffüllt, wenn der Dämpfer komprimiert wird und nach Öffnung der steuerbaren Mittel zum wählbaren Schließen (44), die im Ruhezustand für ein normales Funktionieren des Dämpfers und nach Auffüllen der Überleitungskammer (42) mit Druckgas zum Harteinstellen des Dämpfers geschlossen sind, und daß die Rückholkammer (43) des Sammlers (40) mit einem Verteiler (48) eines Steuerkreises verbunden ist, der eine Leitung (49) für die Versorgung mit Drucksteuerfluid und eine Rückleitung (50) für die Steuerflüssigkeit zu einem Tank aufweist, wobei der Verteiler (48) ein gesteuerter Verteiler mit mindestens drei Wegen und wenigstens zwei Stellungen ist, von denen eine eine Entleerungsstellung ist, bei der die Rückholkammer (43) mit der Rückführleitung (50) verbunden ist und das Entleeren der Rückholkammer (43) von Steuerfluid ermöglicht, damit die Überleitungskammer (42) nach Öffnung der steuerbaren Mittel (44) zum wählbaren Schließen mit Druckgas gefüllt werden kann, und von denen die andere eine Stellung zum Auffüllen der Rückholkammer (43) ist, bei der letztere mit der Leitung (49) für die Versorgung mit Drucksteuerfluid verbunden ist und das Auffüllen der Rückholkammer (43) mit Drucksteuerfluid ermöglicht, um das Entleeren der Überleitungskammer (42) und die Rückführung des Druckgases in die Entspannungskammer (31) des Dämpfers nach Öffnung der steuerbaren Mittel (44) zum wählbaren Schließen zu ermöglichen.

3. Dämpfer nach Anspruch 2, dadurch gekennzeichnet, daß der gesteuerte Verteiler (48) ein Verteiler mit drei Stellungen ist, von denen die dritte Stellung eine Stellung zum Trennen der Rückholkammer (43) von den Leitungen (49, 50) zum Versorgen und Rückführen von Steuerfluid ist, wobei die Trennstellung eine Sicherheitsverriegelung der Rückholkammer (43) wenigstens so lange gewährleistet, wie letztere gefüllt ist.

4. Dämpfer nach Anspruch 2 oder 3, dadurch gekennzeichnet, daß der Steuerfluidkreis (48, 49, 50) ein Hydraulikkreis des Luftfahrzeugs ist.

5. Dämpfer nach einem der Ansprüche 2 bis 4, dadurch gekennzeichnet, daß die steuerbaren Mittel zum wählbaren Schließen wenigstens ein Elektrodurchlaßventil (44) und den zugehörigen elektrischen Steuerschaltkreis (46) aufweisen und daß der Verteiler (48) ein Elektroverteiler ist, dessen elektrischer Steuerschaltkreis mit dem elektrischen Steuerschaltkreis des Elektroventils (44) derart verbunden ist, daß die Steuerungen des Elektroventils (44) und des Elektroverteilers (48) durch Betätigung eines einzigen Schalters (46) synchronisiert sind, wobei gleichzeitig die Öffnung des Elektroventils (44) aus seiner geschlossenen Ruhestellung und der Übergang des Elektroverteilers (48) in die Stellung zur Entleerung der Rückholkammer (43) bewirkt werden.

6. Dämpfer nach Anspruch 5, dadurch gekennzeichnet, daß der einzige Schalter (46) ebenfalls gleichzeitig die Öffnung des Elektroventils (44) aus seiner Stellung der Trennung der mit Gas gefüllten Überleitungskammer (42) und den Übergang des Elektroverteilers (48) in die Stellung zum Auffüllen der Rückholkammer (43) bewirkt.

7. Dämpfer nach einem der Ansprüche 2 bis 6, dadurch gekennzeichnet, daß er ebenfalls einen Anschlagskontakt (51) aufweist, der auf relative Bewegungen des Dämpferkörpers (1) und der Dämpferstange (8) anspricht und der dazu bestimmt ist, elektrische Schließimpulse an die steuerbaren Mittel (44) zum wählbaren Schließen abzugeben, wenn er eine maximal zulässige Eintauchstellung der Dämpferstange (8) in den Körper (1) von einer Stellung statischer Belastung des Dämpfers aus und aufgrund einer Verschiebung von Gas des Dämpfers zur Überleitungskammer (42) des Sammlers (40) hin erfaßt.

8. Dämpfer nach Anspruch 7, dadurch gekennzeichnet, daß der Anschlagskontakt (51) gleichzeitig den Übergang des Verteilers (48) in die Trennstellung der Rückholkammer (43) steuert.

9. Dämpfer nach einem der Ansprüche 2 bis 8, dadurch gekennzeichnet, daß das innere Volumen des Sammlers (40) groß genug ist, damit die Überleitungskammer (42) in der Stellung zum Entleeren der Rückholkammer (43) das ganze Gas der Entspannungskammer (31) des Dämpfers aufnimmt.

10. Dämpfer nach einem der Ansprüche 2 bis 9, dadurch gekennzeichnet, daß der Überleitungskanal (42') einen T-Anschluß (45) aufweist, der am Dämpfer befestigt ist und die Entspannungskammer (31) des Dämpfers parallel mit den gesteuerten Mitteln (44) zum wählbaren Schließen und mit einem Ventil (33) zum Füllen mit Druckgas verbindet, wobei die Mittel und das Ventil direkt am T-Anschluß (45) befestigt sind.

11. Dämpfer nach einem der Ansprüche 2 bis 10, dadurch gekennzeichnet, daß der Sammler (40) dazu bestimmt ist, am Dämpfer (1, 8) befestigt zu sein, und die Versorgungs- und die Rückführleitung (49, 50) des Steuerkreises dazu bestimmt sind, am Luftfahrzeug befestigt zu sein, wobei der Verteiler (48) mit dem Sammler (40) über eine flexible Leitung (47) verbunden ist.

12. Dämpfer nach Anspruch 1, dadurch gekennzeichnet, daß das Zweite Volumen kompressiblen Fluids der mit dem Sammler (60) verbundenen Entspannungskammer (31) ein Druckgasvolumen ist, das in der Rückholkammer (63) des Sammlers (60) enthalten und durch den Kolben (61) des letzteren von dem in der Entspannungskammer (31) enthaltenen Hydraulikfluid (38) getrennt ist, wobei das Hydraulikfluid unter Komprimieren der Rückholkammer (63) vom Dämpfer in die Überleitungskammer (62) übergeht, wenn der Dämpfer komprimiert wird, und wobei das Schließen der steuerbaren Mittel (64) zum wählbaren Schließen, die im Ruhezustand offen sind, den Dämpfer härter einstellen.

13. Dämpfer nach Anspruch 12, dadurch gekennzeichnet, daß ein Ventil zum Auffüllen mit Druckgas und ein Druckfühler (68) am Sammler (60) angebracht sind und an der dem Trennkolben (61) gegenüberliegenden Seite in das eine Ende der Rückholkammer (63) münden.

14. Dämpfer nach Anspruch 12 oder 13, dadurch gekennzeichnet, daß die Mittel zum wählbaren Schließen ein bistabiles Elektroventil (64) aufweisen, dessen Umschaltung von der geöffneten Stellung in die geschlossene Stellung durch Steuerimpulse erfolgt, die von einem Druckknopfschalter (66) des elektrischen Steuerschaltkreises abgegeben werden.

15. Dämpfer nach Anspruch 14, dadurch gekennzeichnet, daß der Sammler (60) dazu bestimmt ist, am Dämpfer (1, 8) befestigt zu sein, während der Schalter (66) des elektrischen Steuerschaltkreises des Elektroventils (64) dazu bestimmt ist, am Luftfahrzeug angebracht zu sein.

16. Dämpfer nach Anspruch 14, dadurch gekennzeichnet, daß der Sammler und der Schalter (66) des elektrischen Steuerschaltkreises des Elektroventils (64) dazu bestimmt sind, am Luftfahrzeug angebracht zu sein, wobei der Sammler mit dem Dämpfer (1, 8) über eine flexible Leitung verbunden ist.

17. Dämpfer nach einem der Ansprüche 1 bis 16, dadurch gekennzeichnet, daß der äußere Zylinder (2) und der im wesentlichen koaxial im äußeren Zylinder (2) des Körpers (1) gelagerte innere Zylinder (3) an deren auf derselben axialen Seite gelegenen Enden mit einem Boden (4, 7) abgeschlossen und an deren entgegengesetzten Enden (13, 16) offen sind, daß der Dämpfer eine einzige hohle Dämpferstange aufweist, die an dem zwischen die beiden Zylinder (2, 3) eingebrachten Ende (10) offen ist und am entgegengesetzten Ende einen geschlossenen Boden (9) aufweist, wobei die Stange (8) axial gleitend mit Abdichtung (12, 14) zwischen den beiden Zylindern (2, 3) gelagert ist, daß die Glättungsmittel (27, 23, 24) im wesentlichen im Bereich des offenen Endes (16) des inneren Zylinders (3) angeordnet sind, und daß im Ruhezustand Hydraulikfluid eine in der Stange (8) zwischen deren Boden (9) und den Glättungsmitteln begrenzte Kompressionskammer (37) ausfüllt und über die Glättungsmittel einerseits mit einer ringförmigen, durch die Stange (8) zwischen den beiden Zylindern (2, 3) begrenzten und ein an die Glättungsmittel und an eine Druckgaskammer (34, 63) niedrigen Drucks angrenzendes Volumen eines Hydraulikfluids (38) enthaltenden ersten Entspannungskammer (31) und andererseits mit einer im inneren Zylinder (3) begrenzten und eine Druckgaskammer (36) hohen Drucks und ein an das Hydraulikfluid (39) angrenzendes Volumen, das vom Hydraulikfluid der beiden anderen Kammern (37, 31) durch einen im inneren Zylinder (3) gleitend mit Abdichtung gelagerten Trennkolben (28) getrennt ist, aufweisenden zweiten Entspannungskammer (32) in Verbindung ist, wobei der Überleitungskanal (42', 62') zum Sammler (40, 60) mittels eines Anschlusses (45, 65) in jenen Endabschnitt der ringförmigen Entspannungskammer (31) mündet, der dem Boden (4, 7) des Zylinders (2, 3) benachbart ist.

18. Dämpfer nach Anspruch 17, dadurch gekennzeichnet, daß sich im Ruhezustand die Druckgaskammer (34) niedrigen Drucks ebenfalls in der ringförmigen Entspannungskammer (31) befindet.

19. Dämpfer nach Anspruch 17, dadurch gekennzeichnet, daß die Druckgaskammer (63) in der Rückholkammer des Sammlers (60) gelagert und vom angrenzenden Hydraulikfluid (38) in der ringförmigen Entspannungskammer (31) und in der Überleitungskammer (62) des Sammlers (60) durch den in letzterem gelagerten Trennkolben (61) getrennt ist.

20. Landegestell für ein Luftfahrzeug mit einem mit der Struktur des Luftfahrzeugs verbundenen Stützengehäuse, wenigstens einem Element für den Bodenkontakt, wie zum Beispiel ein Rad (72), und wenigstens einem mit dem Stützengehäuse und dem Element für den Bodenkontakt (72) derart verbundenen Dämpfer (1, 8), daß die relativen Bewegungen zwischen dem Stützengehäuse und dem Element gedämpft werden, dadurch gekennzeichnet, daß wenigstens ein Dämpfer ein Dämpfer nach einem der Ansprüche 1 bis 19 ist.

21. Landegestell nach Anspruch 20, dadurch gekennzeichnet, daß es direkt gleitend ist, wobei der Dämpferkörper (1) gleichzeitig das Stützengehäuse bildet und das Element für den Bodenkontakt (72) von jenem Ende der Dämpferstange (8) getragen wird, das außerhalb des Körpers (1) liegt.

22. Landegestell nach Anspruch 20, dadurch gekennzeichnet, daß es vom Balanciertyp ist, bei dem das Element für den Bodenkontakt vom unteren Ende des geneigten und an seinem oberen Ende an der Struktur des Luftfahrzeugs angelenkten Stützengehäuses getragen wird, wobei der Dämpfer mit seinem Körper (1) an der Struktur des Luftfahrzeugs und mit dem Ende der außerhalb des Körpers (1) gelegenen Stange (8) am Stützengehäuse angelenkt ist.

23. Landegestell nach Anspruch 20, dadurch gekennzeichnet, daß es vom Balanciertyp ist, bei dem das Element für den Bodenkontakt vom unteren Ende eines geneigten Schwinghebels getragen wird, der mit seinem oberen Ende am unteren Ende des durch sein oberes Ende mit der Struktur des Luftfahrzeugs verbundenen Stützengehäuses angelenkt ist, wobei der Dämpfer durch seinen Körper (1) am Stützengehäuse und durch das Ende seiner außerhalb des Körpers liegenden Stange (8) am Schwinghebel angelenkt ist.
